(19) Europäisches Patentamt
European Patent Office
Office européen des brevets

(11) **EP 4 113 228 A1**

(12) **EUROPÄISCHE PATENTANMELDUNG**

(43) Veröffentlichungstag:
**04.01.2023 Patentblatt 2023/01**

(21) Anmeldenummer: **22190820.5**

(22) Anmeldetag: **04.09.2020**

(51) Internationale Patentklassifikation (IPC):
**G05B 19/406** (2006.01)     **B23F 23/12** (2006.01)

(52) Gemeinsame Patentklassifikation (CPC):
**G05B 19/406; B23F 23/1218;** G05B 2219/49307

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **13.09.2019 CH 11582019**

(62) Dokumentnummer(n) der früheren Anmeldung(en)
nach Art. 76 EPÜ:
**20764426.1 / 4 028 839**

(71) Anmelder: **Reishauer AG
8304 Wallisellen (CH)**

(72) Erfinder: **DIETZ, Christian
8304 Wallisellen (CH)**

(74) Vertreter: **Detken, Andreas
Isler & Pedrazzini AG
Giesshübelstrasse 45
Postfach 1772
8027 Zürich (CH)**

Bemerkungen:
Diese Anmeldung ist am 17.08.2022 als
Teilanmeldung zu der unter INID-Code 62 erwähnten
Anmeldung eingereicht worden.

(54) **AUTOMATISCHE PROZESSKONTROLLE IN EINER VERZAHNUNGSMASCHINE**

(57)    Es wird ein Verfahren zur Überwachung eines Bearbeitungsprozesses, bei dem Zahnflanken vorverzahnter Werkstücke (23) mit einer Feinbearbeitungsmaschine (1) bearbeitet werden, angegeben. Im Rahmen des Verfahrens wird eine Vielzahl von Messwerten erfasst, während ein Feinbearbeitungswerkzeug (16) in einem Bearbeitungseingriff mit einem Werkstück steht. Aus den Messwerten oder daraus abgeleiteten Werten werden Kenngrössen des Bearbeitungsprozesses berechnet. Mindestens eine der Kenngrössen korreliert mit einem vordefinierten Bearbeitungsfehler des Werkstücks.

FIG. 1

**Beschreibung**

TECHNISCHES GEBIET

Die vorliegende Erfindung betrifft ein Verfahren zur Überwachung einer Feinbearbeitungsmaschine für Verzahnungen, insbesondere einer Wälzbearbeitungsmaschine. Die Erfindung betrifft des Weiteren eine Feinbearbeitungsmaschine, die dazu hergerichtet ist, ein solches Verfahren auszuführen, ein Computerprogramm zur Ausführung eines solchen Verfahrens sowie ein computerlesbares Medium mit einem solchen Computerprogramm.

STAND DER TECHNIK

Die Hartfeinbearbeitung von vorbearbeiteten Verzahnungen ist ein sehr anspruchsvolles Verfahren, bei dem schon kleinste Abweichungen von den Prozessvorgaben dazu führen können, dass die bearbeiteten Werkstücke als Ausschuss ("NIO-Teile", wobei NIO "nicht in Ordnung" bedeutet) angesehen werden müssen. Diese Problematik kann besonders gut anhand des kontinuierlichen Wälzschleifens verdeutlicht werden, gilt aber gleichermassen auch für andere wälzende Feinbearbeitungsverfahren wie das Teilwälzschleifen, das Wälzhonen oder das Hartwälzschälen. In etwas geringerem Ausmass stellen sich ähnliche Probleme aber auch für nicht wälzende Verfahren wie das diskontinuierliche oder kontinuierliche Profilschleifen.

Beim kontinuierlichen Wälzschleifen wird ein vorbearbeiteter Zahnradrohling im Wälzeingriff mit einer schneckenförmig profilierten Schleifscheibe (Schleifschnecke) bearbeitet. Das Wälzschleifen ist ein sehr anspruchsvolles, generierendes Bearbeitungsverfahren, das auf einer Vielzahl von synchronisierten, hochpräzisen Einzelbewegungen basiert und von vielen Randbedingungen beeinflusst wird. Informationen zu den Grundlagen des kontinuierlichen Wälzschleifens finden sich z.B. im Buch von H. Schriefer et al., "Continuous Generating Gear Grinding", Eigenverlag Reishauer AG, Wallisellen 2010, ISBN 978-3-033-02535-6, im Kapitel 2.3 ("Basic Methods of Generating Grinding"), Seiten 121 bis 129.

Theoretisch wird die Zahnflankenform beim kontinuierlichen Wälzschleifen allein durch die abgerichtete Profilform der Schleifschnecke und die Einstelldaten der Maschine bestimmt. Praktisch treten jedoch in der automatisierten Fertigung Abweichungen vom Idealzustand auf, die die Schleifresultate entscheidend beeinflussen können.

Traditionell wird die Qualität der im Wälzschleifverfahren gefertigten Verzahnungen erst nach dem Ende der Bearbeitung durch Verzahnungsmessungen ausserhalb der Bearbeitungsmaschine ("offline") anhand von einer Vielzahl von Messgrössen beurteilt. Dabei existieren verschiedene Normen, die vorschreiben, wie die Verzahnungen zu messen sind und wie zu prüfen ist, ob sich die Messergebnisse innerhalb oder ausserhalb einer Toleranzvorgabe befinden. Eine Zusammenfassung zu solchen Verzahnungsmessungen findet sich z.B. im schon genannten Buch von Schriefer et al. in Kapitel 3 ("Quality Assurance in Continuous Generating Gear Grinding") auf den Seiten 155 bis 200.

Aus dem Stand der Technik ist es bekannt, aufgrund von Verzahnungsmessungen Korrekturen an der Maschine vorzunehmen, um erkannte Bearbeitungsfehler zu beseitigen. In dem genannten Buch von Schriefer et al. wird hierauf im Kapitel 6.10 ("Analysing and Eliminating Gear Tooth Deviations") auf den Seiten 542 bis 551 eingegangen.

Da bei der Verzahnungsprüfung aus Zeit- und Kostengründen meist nur Stichprobenkontrollen erfolgen, werden Bearbeitungsfehler allerdings häufig erst sehr spät erkannt. Dies kann dazu führen, dass unter Umständen erhebliche Teile eines Fertigungsloses als NIO-Teile verworfen werden müssen. Deshalb ist es wünschenswert, Bearbeitungsfehler möglichst schon "online" während der Bearbeitung zu erkennen, idealerweise, bevor ein Bearbeitungsfehler ein solches Ausmass erreicht, dass Werkstücke als NIO-Teile verworfen werden müssen.

Es ist dazu wünschenswert, eine automatisierte Prozessüberwachung vorzusehen, die es ermöglicht, unerwünschte Prozessabweichungen zu erkennen, daraus Hinweise auf mögliche Bearbeitungsfehler zu erhalten und die Einstellungen der Maschine gezielt so zu verändern, dass diese Bearbeitungsfehler vermieden oder zumindest vermindert werden.

Eine Prozessüberwachung sollte idealerweise auch nachträglich noch Rückschlüsse auf Prozessabweichungen zulassen, falls Bearbeitungsfehler erst später erkannt werden, z.B. bei der EOL-Prüfung (EOL = End of Line).

Aus dem Stand der Technik sind geeignete Strategien für die automatisierte Prozessüberwachung bei der Verzahnungsbearbeitung bislang nur ansatzweise bekannt.

So ist es aus DE 10 2014 015 587 A1 bekannt, Parameter an einer Verzahnungsmaschine zu überwachen und eine Verzahnungsprüfung immer dann vorzunehmen, wenn bestimmte gemessene Maschinenparameter von Sollwerten abweichen.

Die Firmenpräsentation "NORDMANN Tool Monitoring", Version vom 05.10.2017, abgerufen am 25.02.2019 von https://www.nordmann.eu/pdf/praesentation/Nordmann_presentation_ENG.pdf, beschreibt verschiedene Massnahmen zur Werkzeugüberwachung an allgemeinen spanenden Werkzeugmaschinen (Seite 3). In der Präsentation sind Anwendungsbeispiele in verschiedenen spanenden Bearbeitungsverfahren dargestellt, darunter auch in knapper Form einige wenige Beispiele für Verfahren, die bei der Zahnradbearbeitung relevant sind, insbesondere Wälzfräsen (Seiten 41 und 42), Hartschälen (Seite 59) und Honen (Seite 60). Das kontinuierliche Wälzschleifen wird lediglich am Rande erwähnt (z.B. Seiten 3 und 61).

Verfahren zur automatischen Prozessüberwachung bei verschiedensten Bearbeitungsverfahren sind u.a. auch aus folgenden Dokumenten bekannt: US 5,070,655, US 3,809,970, US 4,894,644, und Klaus Nordmann, "Prozessüberwachung beim Schleifen und Abrichten", Schleifen + Polieren 05/2004, Fachverlag Möller, Velbert (DE), Seiten 52-56. Auch hierbei wird aber auf die Feinbearbeitung von Verzahnungen nicht näher eingegangen.

Eine Schwierigkeit der Prozessüberwachung bei der Verzahnungsbearbeitung ist die Tatsache, dass die überwachten Messgrössen in einer hochkomplexen Weise von einer Vielzahl von geometrischen Eigenschaften des Werkzeugs (bei einer Schleifschnecke z.B. Durchmesser, Modul, Gangzahl, Steigungswinkel usw.), geometrischen Eigenschaften des Werkstücks (z.B. Modul, Zähnezahl, Schrägungswinkel usw.) und Einstellparametern an der Maschine (z.B. radiale Zustellung, axialer Vorschub, Drehzahlen der Werkzeug- und Werkstückspindeln usw.) abhängen. Durch diese vielfältigen, komplexen Abhängigkeiten ist es zum einen äusserst anspruchsvoll, aus den überwachten Messgrössen direkte Rückschlüsse auf konkrete Prozessabweichungen und die dadurch verursachten Bearbeitungsfehler zu ziehen. Zum anderen ist es äusserst schwierig, die Messgrössen aus unterschiedlichen Bearbeitungsvorgängen miteinander zu vergleichen. Eine zusätzliche Herausforderung ergibt sich beim Einsatz von abrichtbaren Werkzeugen. Durch das Abrichten verändert sich der Durchmesser des Werkzeugs im Verlauf der Bearbeitung einer Serie von Werkstücken, und damit verändern sich auch die Bearbeitungsbedingungen. Dadurch sind die überwachten Messgrössen aus unterschiedlichen Abrichtzyklen selbst innerhalb derselben Serie von Werkstücken nicht direkt miteinander vergleichbar, selbst wenn alle anderen Rahmenbedingungen gleich bleiben.

Bekannte Verfahren zur Prozessüberwachung berücksichtigen diese Eigenheiten der Verzahnungsbearbeitung bislang ungenügend.

## DARSTELLUNG DER ERFINDUNG

Es ist eine Aufgabe der vorliegenden Erfindung, ein Verfahren zur Prozessüberwachung bei der Verzahnungsbearbeitung anzugeben, das es ermöglicht, Prozessabweichungen zu erkennen und ihnen gezielt entgegenzuwirken. Das Verfahren soll sich insbesondere auch für den Einsatz mit abrichtbaren Werkzeugen eignen.

Diese Aufgabe wird durch ein Verfahren nach Anspruch 1 gelöst. Weitere Ausführungsformen sind in den abhängigen Ansprüchen angegeben.

Es wird ein Verfahren zur Überwachung eines Bearbeitungsprozesses angegeben, bei dem Zahnflanken vorverzahnter Werkstücke in einer Feinbearbeitungsmaschine bearbeitet werden. Die Feinbearbeitungsmaschine weist eine Werkzeugspindel zum rotierenden Antrieb eines Feinbearbeitungswerkzeugs um eine Werkzeugachse und eine Werkstückspindel zum rotierenden Antrieb eines vorverzahnten Werkstücks auf. Das Verfahren umfasst:

Erfassen einer Vielzahl von Messwerten, während das Feinbearbeitungswerkzeug in einem Bearbeitungseingriff mit einem Werkstück steht; und
Berechnen von Kenngrössen des Bearbeitungsprozesses aus den Messwerten oder daraus abgeleiteten Werten.

Dabei korreliert mindestens eine der Kenngrössen mit einem vordefinierten Bearbeitungsfehler des Werkstücks. Insbesondere ist es von Vorteil, wenn eine eineindeutige Beziehung zwischen der Kenngrösse und der Grösse des Bearbeitungsfehlers besteht, insbesondere eine einfache Proportionalität. Dadurch wird es möglich, durch eine Überwachung der Kenngrösse für verschiedene Werkstücke unmittelbare Hinweise auf die Entstehung eines konkreten Bearbeitungsfehlers zu erhalten. Das ermöglicht es selbst ungeübten Bedienern, die Kenngrössen korrekt zu interpretieren und korrigierend einzugreifen.

Mindestens eine der Kenngrössen ist vorzugsweise spezifisch für den Bearbeitungsprozess. Es handelt sich also vorzugsweise nicht einfach nur um eine statistische Grösse wie Mittelwert, Standardabweichung usw., die unabhängig vom konkreten Bearbeitungsprozess gebildet werden kann, sondern um eine Kenngrösse, die Eigenheiten des konkreten Bearbeitungsprozesses berücksichtigt.

Besondere Vorteile ergeben sich, wenn die Kenngrössen mit den Ergebnissen aus Verzahnungsmessungen in eine direkte Beziehung gesetzt werden. Dazu kann das Verfahren umfassen:

Durchführen einer Verzahnungsmessung für ausgewählte Werkstücke, um für jedes dieser Werkstücke mindestens eine Verzahnungsmessgrösse zu ermitteln, die den vordefinierten Bearbeitungsfehler charakterisiert; und
Ermitteln von Korrelationsparametern, die die Korrelation der mindestens einen Kenngrösse mit der mindestens einen Verzahnungsmessgrösse charakterisieren.

Die Berechnung mindestens einer der Kenngrössen kann insbesondere eine spektrale Analyse von Messwerten, insbesondere der Werte eines (vorzugsweise normierten) Leistungsindikators, welcher eine momentane Leistungsaufnahme der Werkzeugspindel während der Bearbeitung der Zahnflanken des Werkstücks anzeigt, und/oder von Werten eines Beschleunigungssensors, umfassen. Dabei werden vorzugsweise insbesondere Spektralanteile bei Vielfachen der Werkzeugdrehzahl und/oder Werkstückdrehzahl ausgewertet. Dadurch ist die Berechung der entsprechenden Kenngrösse spezifisch für den Bearbeitungsprozess. Der Leistungsindikator kann insbesondere ein Mass für die Stromaufnahme der Werkzeugspindel sein.

Wenn der Feinbearbeitungsprozess ein Wälzprozess ist, bei dem das Feinbearbeitungswerkzeug und das Werkstück in einem Wälzeingriff stehen, insbesondere ein Wälzschleifprozess, ist es von Vorteil, wenn die Kenngrössen mindestens eine der folgenden Grössen umfassen:

einen Summenteilungsindikator, der durch Auswertung eines spektralen Anteils von Messwerten, insbesondere des normierten Leistungsindikators, bei der Drehzahl der Werkstückspindel berechnet wird und mit einem Summenteilungsfehler des Werkstücks korreliert,
einen Profilformindikator, der durch Auswertung eines spektralen Anteils von Messwerten, insbesondere eines Beschleunigungssensors, bei der Zahneingriffsfrequenz berechnet wird und mit einer Profilformabweichung des Werkstücks korreliert.

Auch ist es von Vorteil, wenn die Kenngrössen einen Verschleissindikator umfassen, wobei der Verschleissindikator aus einem tiefpassgefilterten spektralen Anteil von Messwerten, insbesondere des normierten Leistungsindikators, berechnet wird und mit einem Verschleissgrad des Feinbearbeitungswerkzeugs korreliert.

Vorteilhaft wird anhand des Verlaufs mindestens einer der Kenngrössen für eine Mehrzahl von Werkstücken eine Prozessabweichung des Bearbeitungsprozesses von einem Sollprozess ermittelt. Dazu werden vorteilhaft ausgewählte Werte einer Kenngrösse mit Werten einer anderen Kenngrösse oder anderen Prozessgrösse korreliert. Vorteilhaft wird der Bearbeitungsprozess anschliessend angepasst, um die Prozessabweichung zu vermindern, oder es werden Grenzwerte angepasst, die im Rahmen der vorstehend erläuterten Echtzeitanalyse verwendet werden, um unzulässige Prozessabweichungen zu identifizieren. Die Ermittlung der Prozessabweichung kann dabei durch einen trainierten maschinellen Lernalgorithmus erfolgen.

Das Verfahren kann das Abspeichern eines Datensatzes in einer Datenbank umfassen, wobei der Datensatz eine eindeutige Kennung des Werkstücks, mindestens einen Prozessparameter und mindestens eine der Kenngrössen umfasst. Des Weiteren kann das Verfahren umfassen:

Abrufen von Datensätzen für eine Mehrzahl von Werkstücken aus der Datenbank; und
graphisches Ausgeben von Werten mindestens einer der Kenngrössen oder daraus abgeleiteter Werte für die Mehrzahl von Werkstücken.

Diese Schritte können z.B. in einem Webbrowser ausgeführt werden, da die Rechen- und Speicherplatzanforderungen für diese Schritte im Vergleich mit der Verarbeitung der Rohdaten sehr moderat sind.

In einigen Ausführungsformen ist mindestens eine der Kenngrössen eine normierte Kenngrösse, d.h. irgendwann im Verlauf der Berechnung der Kenngrösse wird eine Normierungsoperation angewendet. Das kann dadurch geschehen, dass die Kenngrösse aus normierten Messwerten berechnet wird. Dies kann aber auch dadurch geschehen, dass die Normierungsoperation erst auf ein Zwischenergebnis (d.h. auf eine aus den Messwerten abgeleitete Grösse) bei der Berechnung der Kenngrösse angewendet wird.

In einem weiteren Aspekt wird ein Verfahren zur Überwachung eines Bearbeitungsprozesses angegeben, bei dem Zahnflanken vorverzahnter Werkstücke in einer Feinbearbeitungsmaschine bearbeitet werden. Die Feinbearbeitungsmaschine weist eine Werkzeugspindel zum rotierenden Antrieb eines Feinbearbeitungswerkzeugs um eine Werkzeugachse und eine Werkstückspindel zum rotierenden Antrieb eines vorverzahnten Werkstücks auf. Das Verfahren umfasst:

Erfassen einer Vielzahl von Messwerten, während das Feinbearbeitungswerkzeug in einem Bearbeitungseingriff mit einem Werkstück steht; und
Anwenden einer Normierungsoperation auf mindestens einen Teil der Messwerte oder auf Werte einer aus den Messwerten abgeleiteten Grösse, um normierte Werte zu erhalten,
wobei die Normierungsoperation von mindestens einem Prozessparameter abhängt, wobei der mindestens eine Prozessparameter ausgewählt ist aus geometrischen Parametern des Feinbearbeitungswerkzeugs, geometrischen Parametern des Werkstücks und Einstellparametern der Feinbearbeitungsmaschine.

Es wird also vorgeschlagen, Messwerte an der Feinbearbeitungsmaschine zu erfassen und mindestens einen Teil dieser Messwerte oder daraus abgeleitete Werte einer Normierungsoperation zu unterziehen. Die Normierungsoperation berücksichtigt den Einfluss von einem oder mehreren Prozessparametern auf die Messwerte, insbesondere von geometrischen Parametern des Feinbearbeitungswerkzeugs (insbesondere seinen Abmessungen, konkret insbesondere seinem Aussendurchmesser), geometrischen Parametern des Werkstücks und/oder Einstellparametern der Feinbearbeitungsmaschine (insbesondere radialer Zustellung, axialem Vorschub und Drehzahlen der Werkzeug- und Werkstückspindeln). Die resultierenden normierten Werte sind dadurch unabhängig oder zumindest wesentlich weniger stark abhängig von den genannten Prozessparametern.

Dank der Normierungsoperation sind die normierten Werte selbst dann zwischen unterschiedlichen Bearbeitungsvorgängen vergleichbar, wenn sich diese Prozessparameter unterscheiden.

Von besonderer Bedeutung ist die Normierungsoperation dann, wenn die Messwerte Werte eines Leistungsindikators umfassen, welcher eine momentane Leistungsaufnahme der Werkzeugspindel während der Bearbeitung der Zahnflanken des Werkstücks anzeigt. Der erfasste Leistungsindikator kann insbesondere ein Mass für die Stromaufnahme der Werkzeugspindel sein. Ein solcher Leistungsindikator wird in besonderer Weise von den genannten Parametern beeinflusst. Es ist daher von besonderem Vorteil, wenn die Normierungsoperation auf die Werte des Leistungsindikators oder einer daraus abgeleiteten Grösse angewendet wird.

Die Normierungsoperation basiert dabei vorzugweise auf einem Modell, das eine erwartete Abhängigkeit der Messwerte von den genannten Parametern beschreibt. Wenn die Messwerte die Werte eines Leistungsindikators sind, beschreibt das Modell vorzugweise die Abhängigkeit der Prozessleistung (d.h. der für den durchgeführten Bearbeitungsprozess benötigten mechanischen oder elektrischen Leistung) von den genannten Parametern. Das Modell der Prozessleistung kann insbesondere auf einem Kraftmodell beruhen, das eine erwartete Abhängigkeit der Schnittkraft, die am Ort des Kontakts zwischen Feinbearbeitungswerkzeug und Werkstück wirksam ist, von geometrischen Parametern des Feinbearbeitungswerkzeugs, geometrischen Parametern des Werkstücks und Einstellparametern der Feinbearbeitungsmaschine beschreibt. Das Modell der Prozessleistung kann zudem die Länge eines Hebelarms berücksichtigen, der zwischen der Werkzeugachse und einem Kontaktpunkt zwischen dem Feinbearbeitungswerkzeug und dem Werkstück wirksam ist. Die Hebelarmlänge kann insbesondere durch den Aussendurchmesser des Feinbearbeitungswerkzeugs angenähert werden. Zudem kann das Modell der Prozessleistung die Drehzahl der Werkzeugspindel berücksichtigen.

Die Normierungsoperation kann beispielsweise eine Multiplikation der erfassten Messwerte oder daraus abgeleiteter Grössen mit einem Normierungsfaktor umfassen. Es sind aber auch komplexere Normierungsoperationen denkbar. Wenn die Messwerte die Werte eines Leistungsindikators umfassen, kann der Normierungsfaktor insbesondere eine inverse Leistungsgrösse sein, die anhand des Modells der Prozessleistung für die konkret vorliegende Bearbeitungssituation berechnet wurde, oder eine daraus abgeleitete Grösse.

Die Normierungsoperation wird vorzugsweise direkt auf die erfassten Messwerte, gegebenenfalls nach einer Filterung, angewendet. Die Normierungsoperation erfolgt vorteilhaft in Echtzeit, d.h. noch während des Bearbeitungsprozesses, insbesondere noch während der Bearbeitung des jeweiligen Werkstücks, d.h. noch während das Feinbearbeitungswerkzeug in einem Bearbeitungseingriff mit dem Werkstück steht. Dadurch stehen normierte Werte unmittelbar während des Bearbeitungsprozesses zur Verfügung und können in Echtzeit zur Überwachung des Bearbeitungsprozesses eingesetzt werden.

Insbesondere ist es von Vorteil, wenn die normierten Werte in Echtzeit analysiert werden, um noch während des Bearbeitungsprozesses unzulässige Prozessabweichungen zu ermitteln. Das ermöglicht es, Werkstücke, für die eine unzulässige Prozessabweichung ermittelt wurde, unmittelbar anschliessend an ihre Bearbeitung zu identifizieren und gegebenenfalls aus dem Werkstücklos auszuschleusen, um sie einer gesonderten Behandlung zu unterziehen. Beispielsweise können solche Werkstücke einer gesonderten Messung unterzogen werden oder direkt als NIO-Teile ausgesondert werden.

Das Verfahren sieht vorzugsweise eine Neuberechnung der Normierungsoperation immer dann vor, wenn sich mindestens einer der Prozessparameter ändert. Die Neuberechnung der Normierungsoperation umfasst dann vorzugsweise die Anwendung des erwähnten Modells mit den geänderten Prozessparametern.

Die Neuberechnung der Normierungsoperation kann insbesondere aufgrund einer geänderten Dimension des Feinbearbeitungswerkzeugs, insbesondere von dessen Aussendurchmesser, erfolgen und eine Kompensation hinsichtlich der geänderten Dimension umfassen. Das ist dann besonders wichtig, wenn diese Dimension während der Bearbeitung einer Werkstückserie veränderlich ist, wie das regelmässig bei abrichtbaren Werkzeugen der Fall ist. Auf diese Weise werden Kenngrössen, die in unterschiedlichen Abrichtzyklen ermittelt wurden, direkt miteinander vergleichbar.

Die Erfindung stellt des Weiteren eine Feinbearbeitungsmaschine für die Bearbeitung von Zahnflanken vorverzahnter Werkstücke zur Verfügung. Diese weist auf: eine Werkzeugspindel zum rotierenden Antrieb eines Feinbearbeitungswerkzeugs um eine Werkzeugachse; eine Werkstückspindel zum rotierenden Antrieb eines vorverzahnten Werkstücks; eine Steuereinrichtung zur Steuerung eines Bearbeitungsprozesses des Werkstücks mit dem Feinbearbeitungswerkzeug; und eine Prozessüberwachungseinrichtung. Die Prozessüberwachungseinrichtung ist spezifisch dazu hergerichtet, eines der genannten Verfahren auszuführen.

Dazu weist die Prozessüberwachungseinrichtung vorzugsweise auf:

eine Erfassungseinrichtung zum Erfassen einer Vielzahl von Messwerten, während das Feinbearbeitungswerkzeug in einem Bearbeitungseingriff mit einem Werkstück steht; und

eine Normierungseinrichtung zur Anwendung einer Normierungsoperation auf mindestens einen Teil der Messwerte oder auf Werte einer aus den Messwerten abgeleiteten Grösse, um normierte Werte zu erhalten,

wobei die Normierungsoperation von mindestens einem Prozessparameter abhängt, wobei der mindestens eine Prozessparameter ausgewählt ist aus geometrischen Parametern des Feinbearbeitungswerkzeugs, geometrischen Parametern des Werkstücks und Einstellparametern der Feinbearbeitungsmaschine.

Vorzugsweise ist die Normierungseinrichtung dazu ausgebildet, die Normierungsoperation in Echtzeit durchzuführen, während das Feinbearbeitungswerkzeug in einem Bearbeitungseingriff mit dem Werkstück steht.

In einigen Ausführungsformen weist die Prozessüberwachungseinrichtung eine Fehlererkennungseinrichtung auf, die dazu ausgebildet ist, die normierten Werte in Echtzeit zu analysieren, um unzulässige Prozessabweichungen zu ermitteln.

Die Feinbearbeitungsmaschine kann ein Werkstückhandlinggerät aufweisen, das dazu ausgebildet ist, Werkstücke, für die eine unzulässige Prozessabweichung ermittelt wurde, automatisch auszuschleusen.

In einigen Ausführungsformen weist die Prozessüberwachungseinrichtung eine Kenngrössenberechnungseinrichtung zum Berechnen von Kenngrössen des Bearbeitungsprozesses aus den Messwerten oder daraus abgeleiteten Werten auf. Die Kenngrössenberechnungseinrichtung kann dazu ausgebildet sein, für mindestens eine der Kenngrössen eine spektrale Analyse von Messwerten, daraus abgeleiteten Werten oder normierten Werten auszuführen und dabei insbesondere Spektralanteile bei Vielfachen der Drehzahl der Werkzeugspindel und/oder der Werkstückspindel auszuwerten.

Die Prozessüberwachungseinrichtung kann eine Datenkommunikationseinrichtung zum Übermitteln eines Datensatzes an eine Datenbank aufweisen, wobei der Datensatz eine eindeutige Kennung des Werkstücks, mindestens einen Prozessparameter und mindestens eine der Kenngrössen umfasst.

Die Prozessüberwachungseinrichtung kann eine Abweichungsermittlungseinrichtung zum Ermitteln einer Prozessabweichung des Bearbeitungsprozesses von einem Sollprozess anhand von Werten mindestens einer der Kenngrössen für eine Mehrzahl von Werkstücken aufweisen. Die Abweichungsermittlungseinrichtung kann eine Prozessoreinrichtung umfassen, die programmiert ist, einen trainierten maschinellen Lernalgorithmus auszuführen, um die Prozessabweichung zu ermitteln.

Die Prozessüberwachungseinrichtung kann eine Normierungsberechnungseinrichtung zur Neuberechnung der Normierungsoperation bei Änderung von mindestens einem der Prozessparameter aufweisen. Die Normierungsberechnungseinrichtung ist vorzugsweise dazu ausgebildet, bei der Neuberechnung der Normierungsoperation ein Modell anzuwenden, das eine erwartete Abhängigkeit der Messwerte von den Prozessparametern beschreibt, insbesondere ein Modell einer Prozesskraft oder Prozessleistung. Die Normierungsberechnungseinrichtung kann vorteilhaft dazu ausgebildet sein, eine Kompensation hinsichtlich einer Dimension des Feinbearbeitungswerkzeugs auszuführen, insbesondere hinsichtlich dessen Aussendurchmesser.

Die Datenerfassungseinrichtung, Normierungseinrichtung, Fehlererkennungseinrichtung, Kenngrössenberechnungseinrichtung, Normierungsberechnungseinrichtung, Abweichungsermittlungseinrichtung und Datenkommunikationseinrichtung können zumindest teilweise in Software zur Ausführung auf einem oder mehreren Prozessoren der Prozessüberwachungseinrichtung implementiert sein.

Die vorliegende Erfindung stellt des Weiteren ein Computerprogramm zur Verfügung. Das Computerprogramm umfasst Befehle, welche bewirken, dass eine Prozessüberwachungseinrichtung in einer Feinbearbeitungsmaschine der vorstehend erläuterten Art, insbesondere einer oder mehrere Prozessoren der Prozessüberwachungseinrichtung, das vorstehend erläuterte Verfahren ausführt. Das Computerprogramm kann in einer geeigneten Speichereinrichtung, beispielsweise einem separat von der Maschinensteuerung ausgebildeten Rechner, gespeichert sein.

Des Weiteren stellt die Erfindung ein computerlesbares Medium bereit, auf dem das Computerprogramm gespeichert ist. Das Medium kann ein nichtflüchtiges Medium sein, beispielsweise ein Flash-Speicher, eine CD, eine Festplatte usw.

KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:

Fig. 1    eine schematische Ansicht einer Wälzschleifmaschine;

Fig. 2    einen vergrösserten Ausschnitt aus der Fig. 1 im Bereich II;

Fig. 3    einen vergrösserten Ausschnitt aus der Fig. 1 im Bereich III;

Fig. 4    ein Diagramm mit zwei beispielhaften Verläufen der Stromaufnahme der Werkzeugspindel während der Bearbeitung einer Zahnflanke;

Fig. 5   ein Diagramm, das den Maximalwert der Stromaufnahme der Werkzeugspindel für eine Vielzahl von Werkstücken als Funktion des Schleifschneckenaussendurchmessers zeigt; Quadrate: unnormierte Werte; Kreuze: normierte Werte;

Fig. 6   ein Spektrum der Stromaufnahme der Werkzeugspindel über die Bearbeitung eines Werkstücks hinweg;

Fig. 7   ein Spektrum von Messwerten eines Beschleunigungssensors über die Bearbeitung eines Werkstücks hinweg;

Fig. 8   ein Diagramm, das Werte eines Summenteilungsindikators für eine Vielzahl von Werkstücken als Funktion der Schleifschneckenposition zeigt;

Fig. 9   ein Diagramm, das Werte eines Profilformindikators für eine Vielzahl von Werkstücken als Funktion der Schleifschneckenposition zeigt; Dreiecke: erste Werkstückspindel; Kreuze: zweite Werkstückspindel;

Fig. 10   ein Diagramm, das Werte eines Verschleissindikators für eine Vielzahl von Werkstücken als Funktion der Schleifschneckenposition zeigt;

Fig. 11   ein Diagramm, das Werte eines Schwingungsindikators für eine Vielzahl von Werkstücken als Funktion der Schleifschneckenposition zeigt;

Fig. 12   ein Flussdiagramm eines Verfahrens zur Überwachung der Bearbeitung eines Werkstückloses;

Fig. 13   ein Flussdiagramm eines Verfahrens zur automatischen Erkennung und Korrektur von Prozessabweichungen;

Fig. 14   ein Flussdiagramm eines Verfahrens zur graphischen Ausgabe von Kenngrössen und daraus abgeleiteten Informationen; und

Fig. 15   ein schematisches Blockdiagramm von Funktionseinheiten einer Prozessüberwachungseinrichtung.

## BESCHREIBUNG BEVORZUGTER AUSFÜHRUNGSFORMEN

### Beispielhafter Aufbau einer Wälzschleifmaschine

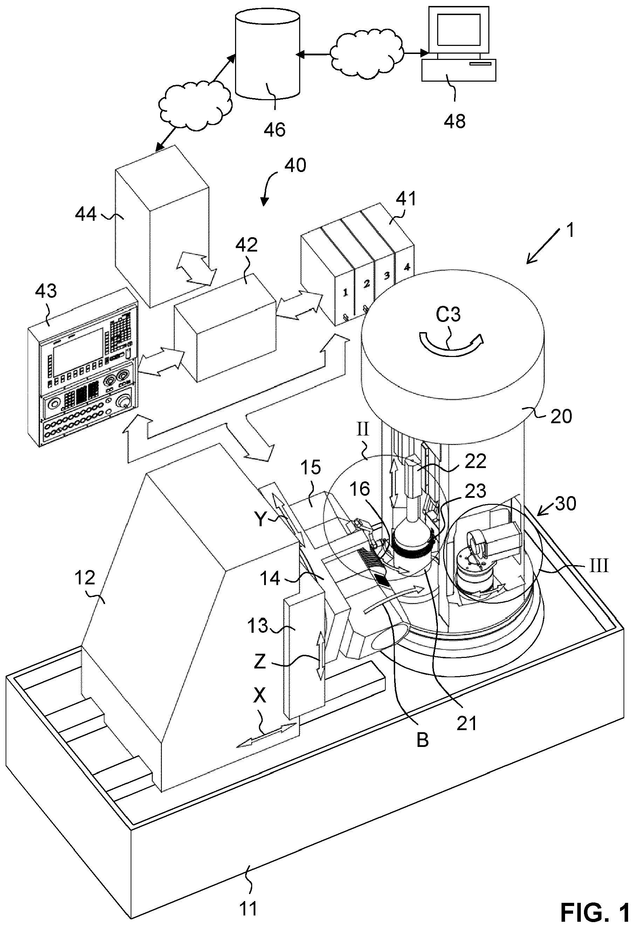

In der Fig. 1 ist als Beispiel für eine Feinbearbeitungsmaschine zur Bearbeitung der Zahnflanken vorverzahnter Werkstücke beispielhaft eine Wälzschleifmaschine 1 dargestellt. Die Maschine weist ein Maschinenbett 11 auf, auf dem ein Werkzeugträger 12 entlang einer radialen Zustellrichtung X verschiebbar geführt ist. Der Werkzeugträger 12 trägt einen Axialschlitten 13, der entlang einer Vorschubrichtung Z gegenüber dem Werkzeugträger 12 verschiebbar geführt ist. Auf dem Axialschlitten 13 ist ein Schleifkopf 14 montiert, der zur Anpassung an den Schrägungswinkel der zu bearbeitenden Verzahnung um eine parallel zur X-Achse verlaufende Schwenkachse (die sogenannte A-Achse) verschwenkbar ist. Der Schleifkopf 14 wiederum trägt einen Shiftschlitten, auf dem eine Werkzeugspindel 15 entlang einer Shiftachse Y gegenüber dem Schleifkopf 14 verschiebbar ist. Auf der Werkzeugspindel 15 ist eine schneckenförmig profilierte Schleifscheibe (Schleifschnecke) 16 aufgespannt. Die Schleifschnecke 16 wird von der Werkzeugspindel 15 zu einer Drehung um eine Werkzeugachse B angetrieben.

Das Maschinenbett 11 trägt des Weiteren einen schwenkbaren Werkstückträger 20 in Form eines Drehturms, der um eine Achse C3 zwischen mindestens drei Stellungen verschwenkbar ist. Auf dem Werkstückträger 20 sind einander diametral gegenüberliegend zwei identische Werkstückspindeln montiert, von denen in der Fig. 1 nur eine Werkstückspindel 21 mit zugehörigem Reitstock 22 sichtbar ist. Die in der Fig. 1 sichtbare Werkstückspindel befindet sich in einer Bearbeitungsposition, in der ein auf ihr aufgespanntes Werkstück 23 mit der Schleifschnecke 16 bearbeitet werden kann. Die andere, um 180° versetzt angeordnete und in der Fig.1 nicht sichtbare Werkstückspindel befindet sich in einer Werkstückwechselposition, in der ein fertig bearbeitetes Werkstück von dieser Spindel entnommen und ein neues Rohteil aufgespannt werden kann. Um 90° zu den Werkstückspindeln versetzt ist eine Abrichteinrichtung 30 montiert.

Alle angetriebenen Achsen der Wälzschleifmaschine 1 werden durch eine Maschinensteuerung 40 digital gesteuert. Die Maschinensteuerung 40 umfasst mehrere Achsmodule 41, einen Steuerrechner 42 und eine Bedientafel 43. Der Steuerrechner 42 empfängt Bedienerbefehle von der Bedientafel 43 sowie Sensorsignale von verschiedenen Sensoren der Wälzschleifmaschine 1 und errechnet daraus Steuerbefehle für die Achsmodule 41. Er gibt des Weiteren Betriebsparameter an die Bedientafel 43 zur Anzeige aus. Die Achsmodule 41 stellen an ihren Ausgängen Steuersignale für jeweils eine Maschinenachse (d.h. für mindestens einen Aktor, der zum Antrieb der betreffenden Maschinenachse dient, wie z.B. einen Servomotor) bereit.

Mit dem Steuerrechner 42 ist eine Prozessüberwachungseinrichtung 44 verbunden. Diese empfängt vom Steuerrechner 42 und gegebenenfalls von weiteren Sensoren laufend eine Vielzahl von Messwerten. Die Prozessüberwachungseinrichtung 44 analysiert einerseits laufend die Messwerte, um frühzeitig Bearbeitungsfehler zu erkennen und betroffene Werkstücke aus dem Bearbeitungsprozess auszuschleusen. Andererseits berechnet die Prozessüberwachungseinrichtung 44 aus den Messwerten verschiedene Kenngrössen des zuletzt bearbeiteten Werkstücks. Diese Vorgänge werden nachstehend noch näher beschrieben.

Die Prozessüberwachungseinrichtung 44 übermittelt für jedes Werkstück einen Datensatz an einen Datenbankserver 46. Der Datensatz enthält eine eindeutige Werkstückkennung sowie ausgewählte Prozessparameter und Kenngrössen. Der Datenbankserver 46 speichert diese Datensätze in einer Datenbank ab, so dass für jedes Werkstück nachträglich der zugehörige Datensatz abgerufen werden kann. Der Datenbankserver 46 mit der Datenbank kann maschinenintern angeordnet sein, oder er kann entfernt von der Maschine angeordnet sein. Der Datenbankserver 46 kann mit der Prozessüberwachungseinrichtung 44 über ein Netzwerk verbunden sein, wie dies in Fig. 1 durch eine Wolke angedeutet ist. Insbesondere kann der Datenbankserver 46 mit der Prozessüberwachungseinrichtung 44 über ein maschinen- oder betriebsinternes LAN, über ein WAN oder über das Internet verbunden sein.

Mit dem Datenbankserver 46 kann ein Client 48 verbunden sein, um Daten vom Datenbankserver 46 abzurufen, zu empfangen und auszuwerten. Auch diese Verbindung kann über ein Netzwerk erfolgen, insbesondere über ein LAN, ein WAN oder das Internet.

Der Client 48 kann insbesondere einen Webbrowser umfassen, mit dem die empfangenen Daten und ihre Auswertung visualisiert werden. Der Client braucht keine besonderen Anforderungen an die Rechenleistung zu erfüllen. Auch benötigt die Clientanwendung keine hohe Netzwerkbandbreite.

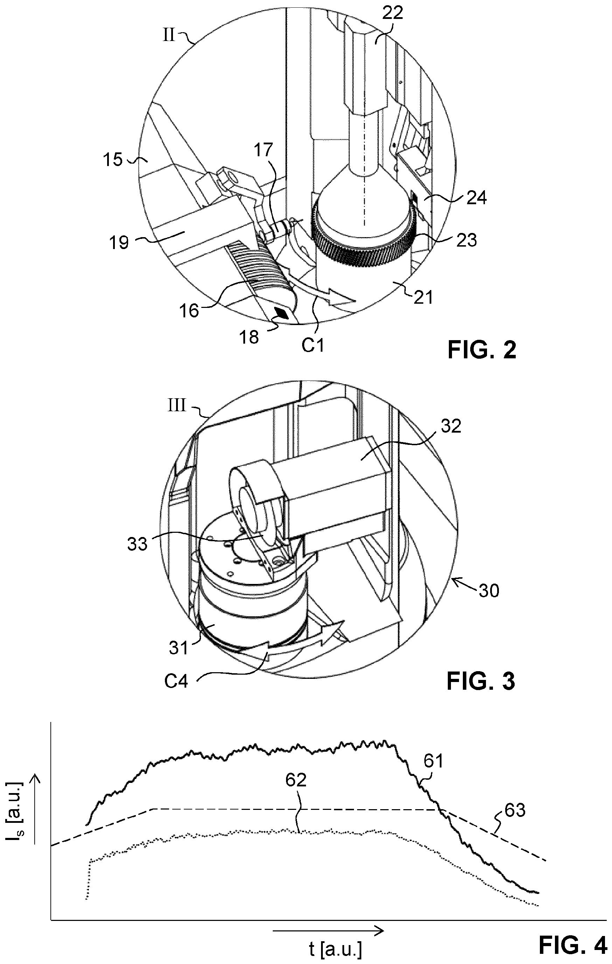

In der Fig. 2 ist der Ausschnitt II aus der Fig. 1 vergrössert dargestellt. Man erkennt die Werkzeugspindel 15 mit der darauf aufgespannten Schleifschnecke 16. An einem feststehenden Teil der Werkzeugspindel 15 ist ein Messtaster 17 schwenkbar montiert. Dieser Messtaster 17 kann wahlweise zwischen der Messstellung der Fig. 2 und einer Parkstellung verschwenkt werden. In der Messstellung kann der Messtaster 17 dazu eingesetzt werden, die Verzahnung eines Werkstücks 23 auf der Werkstückspindel 21 tastend zu vermessen. Dies geschieht "inline", d.h., noch während sich das Werkstück 23 auf der Werkstückspindel 21 befindet. Dadurch können Bearbeitungsfehler frühzeitig erkannt werden. In der Parkstellung befindet sich der Messtaster 17 in einem Bereich, in dem er vor Kollisionen mit der Werkstückspindel 21, dem Reitstock 22, Werkstück 23 und weiteren Komponenten auf dem Werkstückträger 20 geschützt ist. Während der Werkstückbearbeitung befindet sich der Messtaster 17 in dieser Parkstellung.

Auf einer der Schleifschnecke 16 abgewandten Seite des Werkstücks 23 ist eine Einzentriersonde 24 angeordnet. Die Einzentriersonde 24 ist im vorliegenden Beispiel gemäss der Druckschrift WO 2017/194251 A1 ausgestaltet und angeordnet. Bezüglich der Funktionsweise und Anordnung einer Einzentriersonde wird ausdrücklich auf die genannte Druckschrift verwiesen. Insbesondere kann die Einzentriersonde 24 einen induktiv oder kapazitiv arbeitenden Näherungssensor umfassen, wie er aus dem Stand der Technik wohlbekannt ist. Es ist aber auch denkbar, einen optisch arbeitenden Sensor für die Einzentrieroperation zu verwenden, der z.B. einen Lichtstrahl auf die zu vermessende Verzahnung richtet und das von dieser reflektierte Licht detektiert, oder der die Unterbrechung eines Lichtstrahls durch die zu vermessende Verzahnung detektiert, während diese um die Werkstückachse C1 rotiert. Weiterhin ist denkbar, dass auf der Einzentriersonde 24 ein oder mehrere weitere Sensoren angeordnet sind, die Prozessdaten direkt am Werkstück erfassen können, wie dies beispielsweise in US 6,577,917 B1 vorgeschlagen wurde. Solcher weiteren Sensoren können beispielsweise einen zweiten Einzentriersensor für eine zweite Verzahnung, einen Temperatursensor, einen weiteren Körperschallsensor, einen Pneumatiksensor usw. umfassen.

Des Weiteren ist in der Fig. 2 rein symbolisch ein Beschleunigungssensor 18 angedeutet. Der Beschleunigungssensor 18 dient dazu, die bei der Schleifbearbeitung eines Werkstücks und beim Abrichten der Schleifschnecke entstehenden Vibrationen des Stators der Werkzeugspindel 15 zu charakterisieren. In Realität wird der Beschleunigungssensor meist nicht (wie in der Fig 2 angedeutet) an einem Gehäuseteil, sondern z.B. direkt am Stator des Antriebsmotors der Werkzeugspindel 15 angeordnet sein. Beschleunigungssensoren der genannten Art sind an sich wohlbekannt.

Eine Kühlmitteldüse 19 richtet einen Kühlmittelstrahl in die Bearbeitungszone. Um Geräusche auszuzeichnen, die über diesen Kühlmittelstrahl übertragen werden, kann ein nicht dargestellter Akustiksensor vorgesehen sein.

In der Fig. 3 ist der Ausschnitt III aus der Fig. 1 vergrössert dargestellt. Man erkennt hier besonders gut die Abrichteinrichtung 30. Auf einem Schwenkantrieb 31 ist, um eine Achse C4 schwenkbar, eine Abrichtspindel 32 angeordnet, auf der ein scheibenförmiges Abrichtwerkzeug 33 aufgespannt ist. Stattdessen oder zusätzlich kann auch ein feststehendes Abrichtwerkzeug vorgesehen sein, insbesondere ein sogenannter Kopfabrichter, der dazu vorgesehen ist, lediglich mit den Kopfbereichen der Schneckengänge der Schleifschnecke in Eingriff zu kommen, um diese Kopfbereiche abzurichten.

Bearbeitung eines Werkstückloses

Um ein noch unbearbeitetes Werkstück (Rohteil) zu bearbeiten, wird das Werkstück durch einen automatischen Werkstückwechsler auf derjenigen Werkstückspindel aufgespannt, die sich in der Werkstückwechselposition befindet. Der Werkstückwechsel erfolgt zeitparallel zur Bearbeitung eines anderen Werkstücks auf der anderen Werkstückspindel, die sich in der Bearbeitungsposition befindet. Wenn das neu zu bearbeitende Werkstück aufgespannt ist und die Bearbeitung des anderen Werkstücks abgeschlossen ist, wird der Werkstückträger 20 um 180° um die C3-Achse geschwenkt, so dass die Spindel mit dem neu zu bearbeitenden Werkstück in die Bearbeitungsposition gelangt. Vor und/oder während des Schwenkvorgangs wird mit Hilfe der zugeordneten Einzentriersonde eine Einzentrieroperation durchgeführt. Dazu wird die Werkstückspindel 21 in Drehung versetzt, und die Lage der Zahnlücken des Werkstücks 23 wird mit Hilfe der Einzentriersonde 24 vermessen. Auf dieser Basis wird der Wälzwinkel festgelegt. Zudem können mit Hilfe der Einzentriersonde schon vor Beginn der Bearbeitung Hinweise auf eine übermässige Variation des Zahndickenabmasses und andere Vorbearbeitungsfehler abgeleitet werden.

Wenn die Werkstückspindel, die das zu bearbeitende Werkstück 23 trägt, die Bearbeitungsposition erreicht hat, wird das Werkstück 23 durch Verschiebung des Werkzeugträgers 12 entlang der X-Achse kollisionsfrei mit der Schleifschnecke 16 in Eingriff gebracht. Das Werkstück 23 wird nun durch die Schleifschnecke 16 im Wälzeingriff bearbeitet. Während der Bearbeitung wird das Werkstück bei konstanter radialer X-Zustellung laufend entlang der Z-Achse vorgeschoben. Ausserdem wird die Werkzeugspindel 15 langsam kontinuierlich entlang der Shiftachse Y verschoben, um laufend noch unverbrauchte Bereiche der Schleifschnecke 16 bei der Bearbeitung zum Einsatz kommen zu lassen (sogenannte Shiftbewegung). Sobald die Bearbeitung des Werkstücks 23 abgeschlossen ist, wird dieses optional inline mit Hilfe des Messtasters 17 vermessen.

Zeitparallel zur Werkstückbearbeitung wird das fertig bearbeitete Werkstück von der anderen Werkstückspindel entnommen, und es wird ein weiteres Rohteil auf dieser Spindel aufgespannt. Bei jeder Schwenkung des Werkstückträgers um die C3-Achse wird vor dem Schwenken oder innerhalb der Schwenkzeit, also zeitneutral, ein Monitoring ausgewählter Komponenten durchgeführt, und der Bearbeitungsprozess wird erst dann weitergeführt, wenn alle definierten Anforderungen erfüllt sind.

Wenn nach der Bearbeitung einer bestimmten Zahl von Werkstücken die Nutzung der Schleifschnecke 16 so weit fortgeschritten ist, dass die Schleifschnecke zu stumpf und/oder die Flankengeometrie zu ungenau ist, dann wird die Schleifschnecke abgerichtet. Dazu wird der Werkstückträger 20 um $\pm90°$ geschwenkt, so dass die Abrichteinrichtung 30 in eine Stellung gelangt, in der sie der Schleifschnecke 16 gegenüber liegt. Die Schleifschnecke 16 wird nun mit dem Abrichtwerkzeug 33 abgerichtet.

Datenerfassung für die Prozessüberwachung

Die Prozessüberwachungseinrichtung 44 dient dazu, den Feinbearbeitungsprozess, der auf der Wälzschleifmaschine 1 ausgeführt wird, zu überwachen und gegebenenfalls fehlerhaft bearbeitete Werkstücke automatisch zu erkennen und auszuschleusen und/oder korrigierend in den Feinbearbeitungsprozess einzugreifen.

Dazu empfängt die Prozessüberwachungseinrichtung 44 einerseits eine Vielzahl unterschiedlicher Messdaten vom Steuerrechner 42. Unter diesen Messdaten befinden sich Sensordaten, die direkt vom Steuerrechner 42 erfasst wurden, und Daten, die der Steuerrechner 42 aus den Achsmodulen 41 ausliest, z.B. Daten, die die Strom- bzw. Leistungsaufnahme in den Werkzeug- und Werkstückspindeln angeben. Dazu kann die Prozessüberwachungseinrichtung über eine an sich bekannte Schnittstelle mit dem Steuerrechner 42 verbunden sein, z.B. über den bekannten Profinet-Standard.

Auch kann die Prozessüberwachungseinrichtung 44 eigene analoge und/oder digitale Sensoreingänge aufweisen, um direkt Sensordaten von weiteren Sensoren als Messdaten zu empfangen. Bei den weiteren Sensoren handelt es sich typischerweise um Sensoren, die nicht direkt für die Steuerung des eigentlichen Bearbeitungsprozesses benötigt werden, z.B. Beschleunigungssensoren, um Vibrationen zu erfassen, oder Temperatursensoren.

Für die folgende Diskussion wird beispielhaft davon ausgegangen, dass die Prozessüberwachungseinrichtung 44 mindestens die folgenden Messdaten erfasst:

- momentane Winkelgeschwindigkeit oder Drehzahl der Werkzeugspindel 15
- momentane Winkelgeschwindigkeit oder Drehzahl der Werkstückspindeln 21
- Strom- oder Leistungsaufnahme der Werkzeugspindel 15
- lineare Beschleunigungen des Gehäuses der Werkzeugspindel 15 entlang dreier unterschiedlicher Raumrichtungen

Selbstverständlich kann die Prozessüberwachungseinrichtung 44 aber auch noch eine Vielzahl weiterer Messdaten erfassen.

Die Prozessüberwachungseinrichtung 44 erfasst die Messdaten fortlaufend während der Bearbeitung der Werkstücke. Insbesondere wird die Strom- oder Leistungsaufnahme der Werkzeugspindel 15 mit einer genügend hohen Abtastrate erfasst, dass mindestens ein Wert für die Leistungsaufnahme während der Bearbeitung jeder Zahnflanke vorliegt, vorzugsweise eine Vielzahl von Werten pro Zahnflanke.

Normierungsoperation

In der Prozessüberwachungseinrichtung 44 wird auf die erfassten Werte der Strom- oder Leistungsaufnahme der Werkzeugspindel gegebenenfalls zunächst eine Filterung angewendet, z.B. eine Tiefpass- oder Bandpassfilterung, um hochfrequentes Rauschen zu vermindern. Sodann wird auf die (gegebenenfalls gefilterten) Werte eine Normierungsoperation angewendet. Das Ergebnis der Normierungsoperation ist ein normierter Leistungsindikator. Der Wert des normierten Leistungsindikators wird aus der ermittelten Strom- oder Leistungsaufnahme durch Multiplikation mit einem

Normierungsfaktor $N_p$ berechnet. Der Normierungsfaktor berücksichtigt geometrische Parameter des Feinbearbeitungswerkzeugs, geometrische Parameter des Werkstücks und Einstelldaten der Feinbearbeitungsmaschine wie Drehzahl der Werkzeugspindel, radiale Zustellung und axialer Vorschub pro Umdrehung des Werkstücks sowie die sich daraus ergebenden Eingriffsverhältnisse zwischen Werkzeug und Werkstück.

Dem liegen die folgenden Überlegungen zu Grunde. Die Strom- oder Leistungsaufnahme der Werkstückspindel hängt in erheblichem Umfang von geometrischen Parametern des Feinbearbeitungswerkzeugs, geometrischen Parametern des Werkstücks und Einstelldaten der Feinbearbeitungsmaschine ab. So wird z.B. für eine Schleifschnecke mit grösserem Durchmesser bei ansonsten gleichen Bearbeitungsbedingungen aufgrund des längeren wirksamen Hebelarms ein grösseres Drehmoment benötigt und daher eine grössere Stromaufnahme erwartet als für eine Schleifschnecke mit kleinerem Durchmesser. Auch wird z.B. bei ansonsten gleichen Bedingungen für eine höhere axiale Vorschubgeschwindigkeit oder eine grössere radiale Zustellung auch eine entsprechend höhere Stromaufnahme der Werkzeugspindel erwartet, ebenso für eine höhere Drehzahl der Werkzeugspindel. Der Normierungsfaktor berücksichtigt solche Einflüsse. Dadurch wird der normierte Leistungsindikator in der Regel nicht mehr oder in erheblich geringerem Ausmass, als dies bei der direkt erfassten Strom- oder Leistungsaufnahme der Fall ist, von solchen Einflüssen abhängen. Indem diese Einflüsse bei der Berechnung des normierten Leistungsindikators schon berücksichtigt sind, lassen sich Abweichungen von einem Sollprozess anhand des normierten Leistungsindikators viel einfacher erkennen, als dies bei der direkt gemessenen Strom- oder Leistungsaufnahme der Fall wäre.

Dies soll anhand der Figur 4 näher erläutert werden. Figur 4 zeigt zwei typische Verläufe 61, 62 der Stromaufnahme der Werkzeugspindel während der Wälzschleifbearbeitung einer einzelnen Zahnflanke. Der Verlauf 61 wurde für eine verhältnismässig grosse radiale Zustellung gemessen, der Verlauf 62 für eine wesentlich kleinere radiale Zustellung, bei ansonsten gleichen Bearbeitungsbedingungen. Beide Verläufe haben ähnliche Form: nach einer Einlaufphase nimmt der Strom einen nahezu konstanten Wert an, bevor er in einer Auslaufphase wieder absinkt. Sie unterscheiden sich aber stark in ihrer Stromamplitude.

Im Rahmen der Prozessüberwachung wird der zeitliche Verlauf der Stromaufnahme laufend analysiert, um unzulässige Prozessabweichungen zu erkennen. Das kann auf verschiedene Weisen erfolgen. Eine Möglichkeit besteht z.B. darin, Hüllkurven zu definieren, die die Stromaufnahme nicht unter- oder überschreiten darf. Falls eine Unter- oder Überschreitung einer solchen Hüllkurve erfolgt, kann entsprechend auf eine unzulässige Prozessabweichung geschlossen werden. Eine solche Hüllkurve 63 ist in stark vereinfachter Form beispielhaft in Fig. 4 eingezeichnet. Bei der Bearbeitung mit der radialen Zustellung, bei der Stromverlauf 62 aufgezeichnet wurde, stellt Hüllkurve 63 eine Obergrenze des Stroms dar, die nicht überschritten werden darf. Allerdings ist diese Hüllkurve nicht mehr brauchbar, wenn eine grössere radiale Zustellung eingestellt wird, wie durch den Stromverlauf 61 sehr anschaulich illustriert wird: Bei einer grösseren radialen Zustellung würde die Stromaufnahme auch bei ordnungsgemässer Bearbeitung die Hüllkurve 63 überschreiten. Dementsprechend müsste die Hüllkurve 63 für jede Änderung der radialen Zustellung neu bestimmt werden. Dies müsste anhand von Probebearbeitungen oder Erfahrungswerten erfolgen. Beides ist zeitaufwändig und fehleranfällig.

Daher werden im Rahmen der vorliegenden Prozessüberwachung die erfassten Messwerte der Strom- oder Leistungsaufnahme einer Normierungsoperation unterzogen. Die Normierungsoperation berücksichtigt unter anderem die radiale Zustellung. Dadurch werden die normierten Messwerte direkt miteinander vergleichbar, unabhängig vom Wert der radialen Zustellung. Entsprechend kann bei unterschiedlichen Werten der radialen Zustellung immer die gleiche Hüllkurve verwendet werden. Diese braucht nur einmal ermittelt zu werden und kann dann für eine Vielzahl von unterschiedlichen Bearbeitungssituationen eingesetzt werden.

Ähnliche Überlegungen gelten auch bei anderen Verfahren zur Analyse der Messwerte, z.B. bei einer laufenden Überwachung bestimmter spektraler Anteile der Messwerte im Frequenzraum.

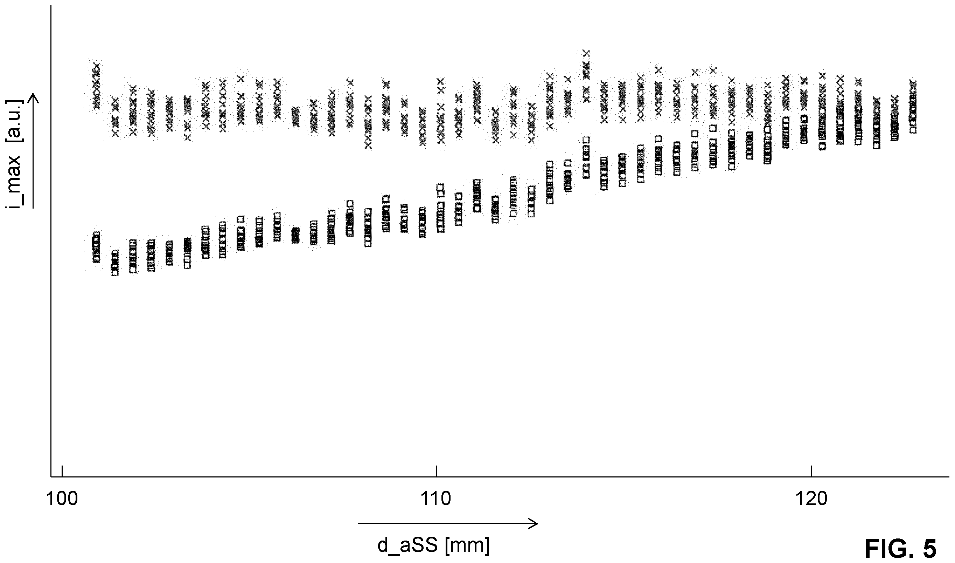

Von besonderer Bedeutung ist der Einfluss des Aussendurchmessers der Schleifschnecke auf die erfassten Messwerte, da sich der Aussendurchmesser der Schleifschnecke bei jedem Abrichtvorgang ändert. Das ist in der Figur 5 illustriert. In der Fig. 5 ist die maximale Stromaufnahme i_max der Werkzeugspindel, die jeweils während der Wälzschleifbearbeitung eines Werkstücks gemessen wurde, für eine Vielzahl von Werkstücken dargestellt. Die Werkstücke wurden alle mit derselben Schleifschnecke bearbeitet, wobei die Schleifschnecke jeweils nach der Bearbeitung einer bestimmten Zahl von Werkstücken abgerichtet wurde. Beim jedem Abrichtvorgang verringert sich der Aussendurchmesser der Schleifschnecke. Dadurch erfolgte die Bearbeitung der Werkstücke mit einem variablen Aussendurchmesser. In der Fig. 5 ist entlang der horizontalen Achse der Aussendurchmesser der Schleifschnecke aufgetragen, entlang der vertikalen Achse die maximale Stromaufnahme für diejenigen Werkstücke, die bei diesem Aussendurchmesser bearbeitet wurden. Mit Quadraten ist die maximale Stromaufnahme eingezeichnet, die direkt gemessen wurde. Man erkennt ohne Weiteres, dass diese Stromaufnahme mit abnehmendem Aussendurchmesser ebenfalls abnimmt. Dadurch sind Messwerte der maximalen Stromaufnahme bei unterschiedlichen Aussendurchmessern nicht direkt miteinander vergleichbar. Mit Kreuzen ist dagegen die normierte maximale Stromaufnahme eingezeichnet, die sich durch die Anwendung der Normierungsoperation auf die gemessene maximale Stromaufnahme ergibt. Die Normierungsoperation berücksichtigt den variablen Aussendurchmesser der Schleifschnecke. Dadurch hängen die Werte der normierten maximalen Stromaufnahme nicht mehr vom Aussendurchmesser der Schleifschnecke ab.

Die Durchführung der Normierungsoperation erfolgt vorzugsweise in Echtzeit, während das Werkstück in der Feinbearbeitungsmaschine 1 bearbeitet wird. Dadurch können einerseits die normierten Messwerte in Echtzeit während der Werkstückbearbeitung analysiert werden, und unzulässige Prozessabweichungen können noch vor dem Ende der Bearbeitung oder unmittelbar im Anschluss daran erkannt werden. Betroffene Werkstücke können entsprechend sofort in Echtzeit identifiziert und ausgeschleust werden. Andererseits ist sichergestellt, dass direkt nach der Beendigung der Bearbeitung eines Werkstücks aus den normierten Messwerten Kenngrössen des Bearbeitungsvorgangs für das jeweilige Werkstück berechnet werden können. Die berechneten Kenngrössen stehen auf diese Weise unmittelbar nach der Beendigung der Bearbeitung eines Werkstücks zur Verfügung. Dadurch können einerseits frühzeitig durch eine Analyse der berechneten Kenngrössen weitere Prozessabweichungen erkannt werden. Andererseits besteht keine Notwendigkeit, die direkt erfassten Messwerte (d.h. die Rohdaten) über einen längeren Zeitraum hinweg zu speichern, wie dies bei einer Offline-Auswertung der Fall wäre. Vielmehr genügt es, die berechneten Kenngrössen gemeinsam mit einer Kennung des jeweiligen Werkstücks und ausgewählten Prozessparametern abzuspeichern. Dadurch können die Speicherplatzanforderungen sehr gering gehalten werden.

Beispiele für die Berechnung von Kenngrössen aus Messgrössen

In der Prozessüberwachungseinrichtung 44 werden aus dem (vorzugsweise normierten) Leistungsindikator und anderen Messgrössen verschiedene Kenngrössen berechnet, die das bearbeitete Werkstück und dessen Bearbeitungsprozess charakterisieren. Diese Kenngrössen sind vorteilhaft prozessspezifische Grössen, so dass sie direkte Rückschlüsse auf Prozessabweichungen im Bearbeitungsprozess zulassen. Insbesondere ermöglichen es die Kenngrössen, bestimmte Bearbeitungsfehler des Werkstücks vorherzusagen. Dadurch kann die Zahl der Werkstücke, die einer Einzelverzahnungsmessung unterzogen werden, reduziert werden, während Prozessabweichungen dennoch zuverlässig frühzeitig erkannt werden können und gegebenenfalls korrigierend in den Bearbeitungsprozess eingegriffen werden kann.

Die Berechnung von Kenngrössen aus Messgrössen wird im Folgenden beispielhaft für die folgenden drei Kenngrössen illustriert:

(a) Summenteilungsindikator $I_{fP}$
(b) Verschleissindikator $I_{Wear}$
(c) Profilformindikator $I_{ffa}$

Alle drei Kenngrössen werden jeweils durch eine spektrale Analyse des zeitlichen Verlaufs von Messgrössen über die Bearbeitung des Werkstücks hinweg ermittelt.

(a) Summenteilungsindikator $\underline{I_{fP}}$

Zur Ermittlung des Summenteilungsindikators $I_{fP}$ wird der Spektralanteil des (vorzugsweise normierten) Leistungsindikators bei der Werkstückdrehzahl $n_C$ ausgewertet.

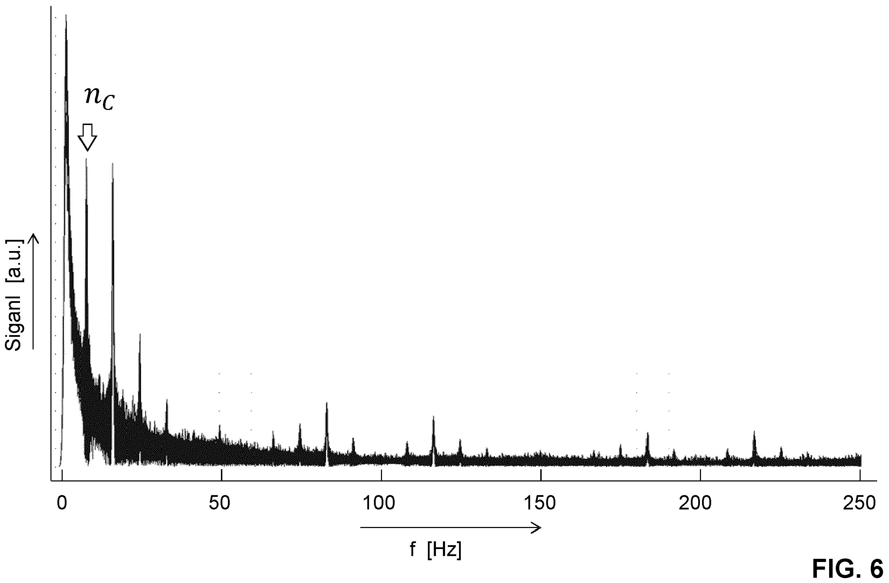

Dies ist in Fig. 6 illustriert. Diese zeigt ein Spektrum der normierten Stromaufnahme (Absolutwert des Spektralanteils der normierten Stromaufnahme als Funktion der Frequenz "f"). Ein solches Spektrum kann durch eine FFT des zeitlichen Verlaufs der normierten Stromaufnahme erhalten werden. Mit einem Pfeil ist der Spektralanteil der normierten Stromaufnahme bei der Drehrate $n_C$ der Werkstückspindel bezeichnet. Um diesen Spektralanteil zu quantifizieren, kann die spektrale Intensität bei dieser Frequenz ermittelt werden, oder es kann ein schmaler Bereich des Spektrums um diese Frequenz herum integriert werden. Die resultierende Grösse ist der Summenteilungsindikator $I_{fP}$.

Der Summenteilungsindikator $I_{fP}$ ist im Allgemeinen umso grösser, je grösser der Summenteilungsfehler der Vorverzahnung des Werkstücks ist, und/oder je schlechter der Rundlauf des Werkstücks ist. Aus dem Summenteilungsindikator $I_{fP}$ kann daher auf bestehende Summenteilungsfehler der Rohteile aus der Vorverarbeitung und/oder auf Rundlauffehler, z.B. aufgrund fehlerhafter Ausrichtung des Spannmittels für die Werkstücke, geschlossen werden.

(b) Verschleissindikator $\underline{I_{Wear}}$

Zur Ermittlung des Verschleissindikators $I_{Wear}$ wird der statische Anteil des normierten Leistungsindikators, also der Anteil unterhalb einer oberen Grenzfrequenz von z.B. 2 Hz, ermittelt. Dazu kann z.B. der zeitliche Verlauf des Leistungsindikators tiefpassgefiltert und integriert werden.

Der Verschleissindikator $I_{Wear}$ kann als Mass für die normierte Zerspanungsenergie verstanden werden, die für ein Werkstück aufgewendet wurde, nachdem alle geometrischen Einflüsse und die Einflüsse der verwendeten Technologiedaten wie radiale Zustellung und axialer Vorschub durch die Normierungsoperation beseitigt wurden. Vereinfacht ausgedrückt, gilt: Je höher der Wert des Verschleissindikators $I_{wear}$, desto mehr Material hat die Schleifschnecke bei gegebener Antriebsleistung vom Werkstück abgetragen. Somit spiegelt eine Verringerung des Verschleissindikators bei ansonsten unveränderten Bedingungen eine Verschlechterung des Abtragverhaltens des Werkzeugs am Werkstück wider. Insofern weist eine Abnahme des Wertes des Verschleissindikators $I_{Wear}$ auf einen zunehmenden Verschleiss des Werkzeugs hin.

(c) Profilformindikator $I_{ffa}$

Die normierte Stromaufnahme wird zu höheren Frequenzen hin immer weniger aussagekräftig. Daher werden zur Berechnung von Kenngrössen, die sich aus höherfrequenten Prozessanteilen ergeben, vorzugsweise andere Messwerte verwendet, z.B. die Messwerte des Beschleunigungssensors 18.
Zur Ermittlung des Profilformindikators $I_{ffa}$ wird der Spektralanteil solcher Messwerte bei der Zahneingriffsfrequenz ausgewertet. Die Zahneingriffsfrequenz entspricht dabei der Werkstückdrehzahl, multipliziert mit der Zähnezahl des Werkstücks:

$$f_z = n_C \cdot z$$

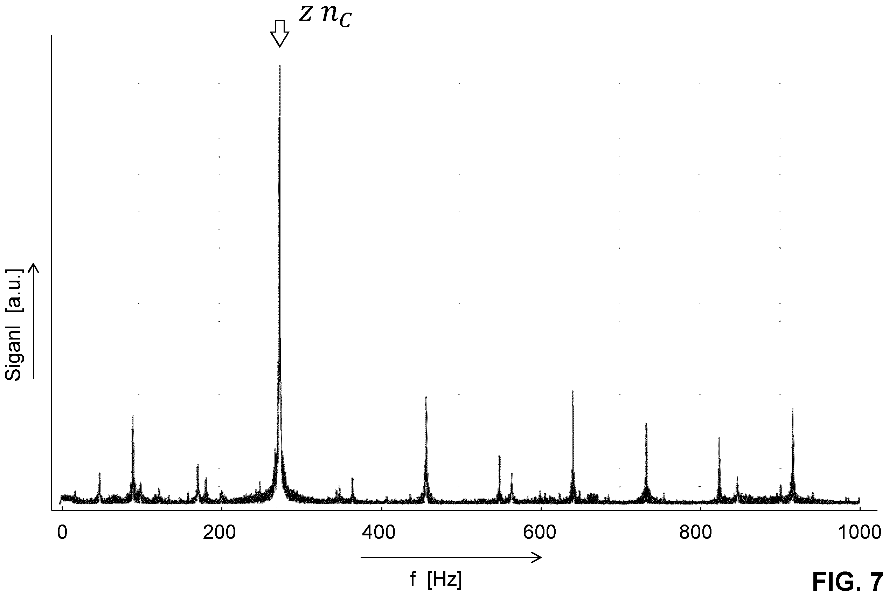

Dies wird in der Fig. 7 illustriert. Diese zeigt ein Spektrum der Signale des Beschleunigungssensors 18 während der Bearbeitung eines Werkstücks. Mit einem Pfeil ist der Spektralanteil bei der Zahneingriffsfrequenz bezeichnet. Dieser kann z.B. durch Integration eines schmalen Bereichs des Spektrums um die Zahneingriffsfrequenz herum quantifiziert werden.
Der Profilformindikator $I_{ffa}$ ist im Allgemeinen umso grösser, je stärker die Profilform von der idealen Profilform gemäss Auslegung abweicht. Aus dem Profilformindikator kann daher auf Profilformabweichungen bzw. Prozessabweichungen, die zu solchen Profilformabweichungen führen, geschlossen werden.

Beispiel für die Berechnung weiterer Kenngrössen

Die Berechnung von Kenngrössen wurde vorstehend anhand von drei Beispielen erläutert. Es versteht sich aber von selbst, dass noch eine Vielzahl weiterer Kenngrössen ermittelt werden können.
Ein weiteres Beispiel ist der Schwingungsindikator $I_{Vib}$. Diese Kenngrösse ergibt sich durch Integration der Absolutwerte der Messsignale des Beschleunigungssensors in der Frequenzdomäne.

Erkennung von Prozessabweichungen

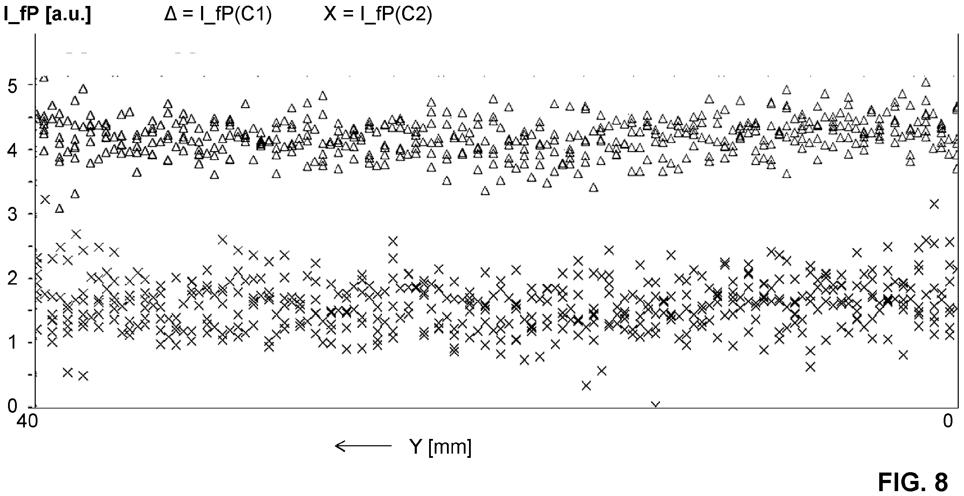

Durch eine Überwachung der Veränderungen der ermittelten Kenngrössen über eine Mehrzahl von Werkstücken hinweg können Indikatoren für Abweichungen des Bearbeitungsprozesses von einem idealisierten Sollprozess ermittelt werden. Auf dieser Basis kann der Bearbeitungsprozess entsprechend angepasst werden, um die Abweichungen zu vermindern. Auch kann ein Vergleich der ermittelten Kenngrössen für eine Mehrzahl von Werkstücken dazu verwendet werden, Grenzwerte wie die oben erwähnten Hüllkurven für die Echtzeitüberwachung genauer zu definieren, um unzulässige Prozessabweichungen in Echtzeit mit grösserer Treffsicherheit feststellen zu können.
Dies wird im Folgenden anhand der Figuren 8 bis 11 erläutert.
Bei der Interpretation dieser Diagramme sind vorab bestimmte Eigenheiten des hier gewählten Bearbeitungsverfahrens zu beachten.
Zum einen ist zu beachten, dass jedes Werkstück in zwei Durchgängen bearbeitet wird, nämlich einem Schruppvorgang und einem Schlichtvorgang. Die Shiftstrategie ist dem wie folgt angepasst: Jedes Werkstück wird zunächst mit einem bestimmten Schleifschneckenbereich geschruppt. Sodann wird die Schleifschnecke um einen bestimmten Betrag vershiftet (in den Diagrammen zu höheren Y-Werten hin, also nach links), so dass für das Schlichten ein noch unverbrauchter Schleifschneckenbereich verwendet wird. Nach dem Schlichten wird die Schleifschnecke wieder an das Ende des Schleifschneckenbereichs, der zuletzt für das Schruppen verwendet wurde, zurück vershiftet, und der folgende Schleifschneckenbereich wird zum Schruppen des nächsten Werkstücks verwendet. Dadurch wird fast jeder Schleifschneckenbereich zuerst zum Schlichten eines Werkstücks und später zum Schruppen eines späteren Werkstücks eingesetzt. Lediglich der ganz rechts liegende Schleifschneckenbereich, nahe Y = 0, wird bei dieser Shiftstrategie nur für Schruppvorgänge eingesetzt. Die Bearbeitungsposition Y in den Figuren 8 bis 11 zeigt an, welcher Schneckenbereich entlang der Schleifschneckenbreite für die Bearbeitung des jeweiligen Werkstücks während des Schruppens verwendet wurde.
Andererseits ist zu beachten, dass die Schleifschnecke jedes Mal frisch abgerichtet wird, wenn beim Shiften das Ende der Schleifschnecke erreicht wird. Beim Abrichten verringert sich jeweils der Aussendurchmesser der Schleifschnecke. Dadurch ändern sich einerseits die Hebelverhältnisse, über die beim Schleifen der Werkstücke ein Antriebsdrehmoment in eine Schnittkraft umgewandelt wird, und andererseits ändern sich auch die Eingriffsverhältnisse über die Bearbeitung jeder Zahnflanke hinweg. In den Figuren 8 bis 11 ist jeweils eine Kenngrösse über mehrere Abrichtzyklen hinweg als Funktion der Bearbeitungsposition Y beim Schruppen dargestellt. Dank der Normierungsoperation hat das Abrichten keinen oder nur einen geringen Einfluss auf die jeweilige Kenngrösse. Der Grund hierfür liegt darin, dass der Einfluss des Abrichtvorgangs auf die Geometrie der Schleifschnecke durch den Normierungsfaktor berücksichtigt wird. Dadurch sind Werte des normierten Leistungsindikators in unterschiedlichen Abrichtzyklen direkt miteinander vergleichbar. Entsprechend sind auch die dargestellten Kenngrössen für unterschiedliche Abrichtzyklen trotz des veränderlichen Aussendurchmessers der Schleifschnecke direkt miteinander vergleichbar. Hierin liegt ein grosser Vorteil der vorgeschlagenen Normierungsoperation.

In der Figur 8 ist der Summenteilungsindikator $I_{fP}$ für den Schruppvorgang für eine Vielzahl von Werkstücken über mehrere Abrichtzyklen hinweg als Funktion der Bearbeitungsposition Y entlang der Schleifschneckenbreite dargestellt. In dem Diagramm wird unterschieden, ob das Werkstück auf der ersten oder der zweiten Werkstückspindel bearbeitet wurde ($I_{fP}(C1)$ bzw. $I_{fP}(C2)$). Mit Dreiecken ist der Summenteilungsindikator $I_{fP}(C1)$ für Werkstücke, die mit der ersten Werkstückspindel bearbeitet wurden, dargestellt, während mit Kreuzen der Summenteilungsindikator $I_{fp}(C2)$ für Werkstücke, die mit der zweiten Werkstückspindel bearbeitet wurden, dargestellt ist.

Es ist unmittelbar erkennbar, dass der Summenteilungsindikator für die erste Werkstückspindel im Mittel erheblich höher ist als für die zweite Werkstückspindel. Das deutet bei gleich vorbearbeiteten Werkstücken auf Rundlauffehler der Werkstücke auf der ersten Werkstückspindel aufgrund fehlerhafter Ausrichtung des Spannmittels hin. Solche Rundlauffehler können zu unerwünschter Geräuschentwicklung beim Einsatz der so gefertigten Verzahnung führen. Gleichzeitig ist erkennbar, dass die Abrichtvorgänge auf den Wert des ermittelten Summenteilungsindikators dank der Normierungsoperation praktisch keinen Einfluss haben.

Die Erkennung von Rundlauffehlern und der entsprechenden Ursache wird dem Bediener also dadurch erleichtert, dass die Kenngrösse $I_{fP}$ mit einer anderen Grösse des Bearbeitungsprozesses, in diesem Falle mit der Position Y entlang der Schleifschneckenbreite, korreliert und visuell dargestellt wird. Statt mit der Position Y könnte eine Korrelation hier auch mit anderen Grössen erfolgen, im einfachsten Fall mit einer laufenden Werkstücknummer.

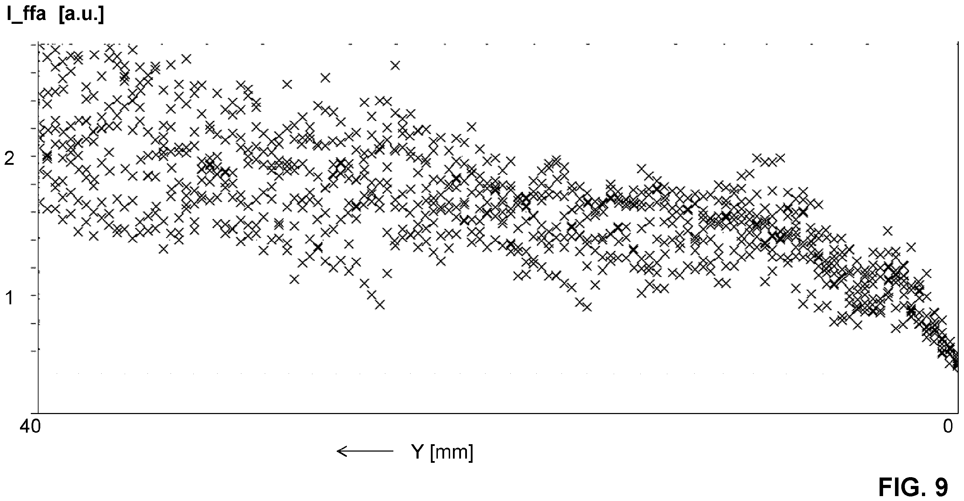

In der Figur 9 ist der Profilformindikator $I_{ffa}$ für eine Vielzahl von Werkstücken wiederum als Funktion der Bearbeitungsposition Y für den Schruppvorgang über mehrere Abrichtzyklen hinweg dargestellt. Es ist erkennbar, dass unabhängig vom Abrichtzyklus am rechten Rand der Schleifschnecke (nahe Y = 0), wo nach jedem Abrichtvorgang die Bearbeitung beginnt, der Profilformindikator erheblich kleiner ist als im weiteren Verlauf der Schleifschnecke und im Mittel zum linken Rand der Schleifschnecke (Y = 40 mm) hin bei einer grossen Streubreite zunimmt. Das Diagramm zeigt also, dass die jeweils ersten Werkstücke eines Abrichtzyklus mit der korrekten Profilform gefertigt werden, während für spätere Werkstücke zunehmend Profilformabweichungen entstehen, die zudem stark streuen. Wenn man sich die oben dargestellte Shiftstrategie verdeutlicht, zeigt dies an, dass die Schleifschnecke in den Bereichen, in denen mit ihr zuerst ein Schlichtvorgang und später ein Schruppvorgang durchgeführt wird, übermässig belastet wird.

In der Figur 9 wird dem Bediener die Erkennung von Profilformfehlern und entsprechenden Ursache also wiederum dadurch erleichtert, dass die Kenngrösse $I_{ffa}$ mit einer anderen Grösse des Bearbeitungsprozesses, in diesem Fall wiederum mit der Position Y entlang der Schleifschneckenbreite, korreliert und visuell dargestellt wird.

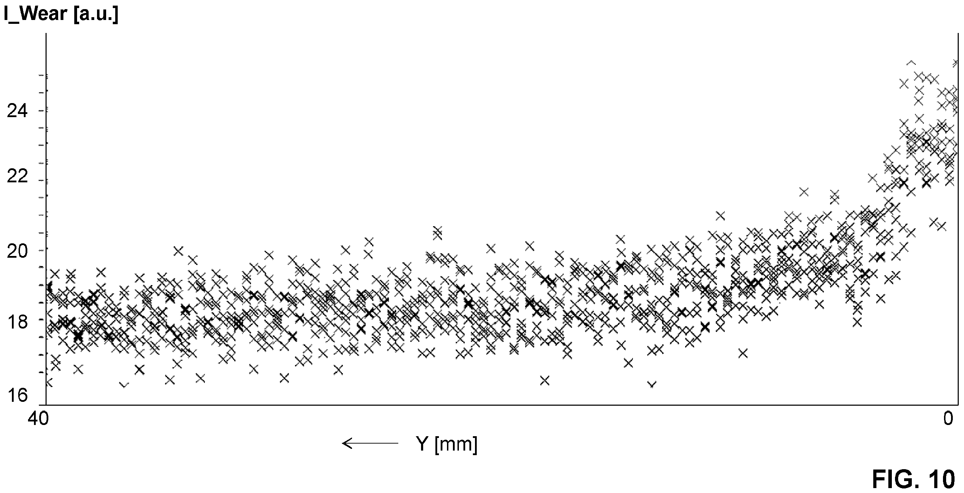

In der Figur 10 ist der Verschleissindikator $I_{Wear}$ für eine Vielzahl von Werkstücken wiederum als Funktion der Bearbeitungsposition Y für den Schruppvorgang dargestellt. Der Verschleissindikator besitzt relativ grosse Werte am rechten Ende der Schleifschnecke nahe Y = 0. Im weiteren Verlauf der Schleifschneckenbreite sinkt der Verschleissindikator schnell auf deutlich niedrigere Werte ab. Dabei ist zu beachten, dass der Verschleissindikator nicht direkt ein Mass für den Verschleiss selbst ist, sondern ein Mass für die abgetragene Materialmenge auf der Zahnflanke. Über den grössten Bereich der Schleifschneckenbreite wird also von den Zahnflanken weniger Material abgetragen als im ganz rechten Bereich nahe Y = 0. Das deutet auf erhöhten Verschleiss in allen Bereichen ausser im ganz rechten Bereich hin. Der Verlauf des Verschleissindikators über die Schleifschneckenbreite bestätigt insofern die Erkenntnisse, die auch aus dem Verlauf des Profilformindikators über die Schleifschneckenbreite gewonnen werden können: Der Verschleissindikator zeigt an, dass die Schleifschnecke überall ausser im äusserst rechten Bereich nahe Y = 0 übermässig verschlissen wird.

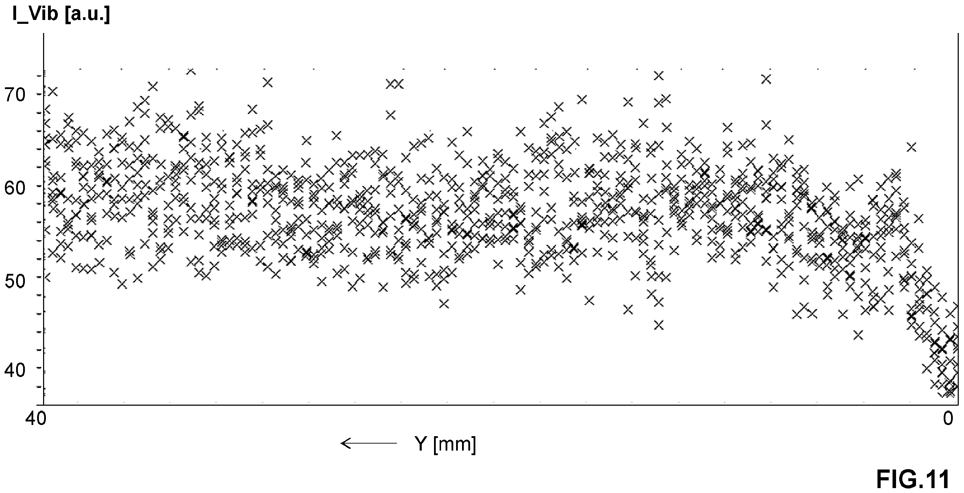

In der Figur 11 ist der Schwingungsindikator $I_{Vib}$ für eine Vielzahl von Werkstücken wiederum als Funktion der Bearbeitungsposition Y für den Schruppvorgang dargestellt. Der Schwingungsindikator zeigt an, dass im verschlissenen Bereich der Schleifschnecke trotz des geringeren Materialertrags eine höhere Schwingungsbelastung entsteht. Dies kann wiederum zu unerwünschten Geräuschen beim Einsatz der so gefertigten Verzahnung führen. Der Verlauf des Schwingungsindikators über die Schleifschneckenbreite bestätigt insofern erneut die Erkenntnisse, die schon aus dem Verlauf des Profilformindikator und des Verschleissindikators gewonnen wurden.

Um hier korrigierend einzugreifen, können beispielsweise die Drehzahl der Werkzeugspindel, die radiale Zustellung oder der axiale Vorschub pro Umdrehung des Werkstücks verringert werden.

Vergleich mit Messwerten aus der Verzahnungsmessung

Die ermittelten Kenngrössen können für ausgewählte Werkstücke mit den Ergebnissen einer Verzahnungsmessung auf einem Verzahnungsprüfstand verglichen werden. Auf diese Weise können Parameter, die die Korrelation der Kenngrössen mit tatsächlich vorliegenden Formabweichungen beschreiben, quantitativ ermittelt werden. Beispielsweise kann im Falle einer linearen Korrelation zwischen Kenngrösse und Formabweichung eine lineare Regression vorgenommen werden, um die Parameter der linearen Korrelation zu bestimmen. Dadurch wird es möglich, mit Hilfe der Kenngrössen direkt für jedes bearbeitete Werkstück Formabweichungen zu quantifizieren, was sonst nur mittels Verzahnungsmessungen möglich wäre und einen unverhältnismässigen Aufwand bedeuten würde.

Webbasiertes Interface

Die graphische Darstellung der ermittelten Kenngrössen und ihre Korrelation mit anderen charakteristischen Grössen des Bearbeitungsprozesses kann insbesondere plattformunabhängig auf einem beliebigen Clientrechner über einen Webbrowser erfolgen. Auch andere Auswertungsmassnahmen können entsprechend plattformunabhängig realisiert werden. Dadurch wird eine Analyse auch aus der Ferne erleichtert.

Automatische Erkennung von Bearbeitungsfehlern

Im vorstehenden Beispiel erfolgte die Analyse des Verlaufs der verschiedenen Kenngrössen über die Schleifschneckenbreite visuell durch den Bediener an der Maschine oder durch einen Experten an einem beliebigen Clientrechner. Stattdessen kann eine solche Analyse aber auch vollautomatisch durchgeführt werden.

Hierzu kann die Prozessüberwachungseinrichtung 44 einen Algorithmus ausführen, der automatisch Muster in den ermittelten Kenngrössen über mehrere Werkstücke hinweg erkennt. Hierfür sind insbesondere Algorithmen des maschinellen Lernens geeignet, wie sie in unterschiedlichsten Ausführungen bekannt sind. Oft werden solche Algorithmen auch als "künstliche Intelligenz" bezeichnet. Ein Beispiel hierfür sind neuronale Netzwerkalgorithmen. Es liegt auf der Hand, dass ein solcher Algorithmus in den vorstehenden Beispielen ohne weiteres z.B. Unterschiede des Summenteilungsindikators zwischen der ersten und zweiten Werkstückspindel oder das oben beschriebene Verschleissverhalten über die Schleifschneckenbreite erkennen könnte. Hierzu kann der Algorithmus in der üblichen Weise mit Hilfe von Trainingsdatensätzen trainiert werden. Die Trainingsdatensätze können insbesondere Parameter, die die Korrelation der Kenngrössen mit tatsächlich vorliegenden Formabweichungen gemäss Verzahnungsmessung beschreiben, berücksichtigen.

Es können nun die nötigen Massnahmen ergriffen werden, um Prozessabweichungen zu beseitigen. Beispielsweise kann bei der Erkennung von Rundlauffehlern die Zentrierung des Werkstückspannmittels auf der entsprechenden Werkstückspindel manuell oder automatisch korrigiert werden. Bei der Erkennung von übermässigem Verschleiss können die radiale Zustellung und/oder der axiale Vorschub entsprechend reduziert werden. Auch diese Massnahmen können manuell getroffen werden oder automatisch erfolgen.

Kraftmodell

Die Berechnung des Normierungsfaktors erfolgt vorzugsweise modellbasiert.

Für das Wälzschleifen existieren in der Literatur Modelle, die die Abhängigkeit der Schnittkraft von geometrischen Parametern von Werkzeug und Werkstück und von technologischen Parametern beschreiben. Beispielhaft sei auf das schon erwähnte Buch von H. Schriefer et al., "Continuous Generating Gear Grinding", Eigenverlag Reishauer AG, Wallisellen 2010, ISBN 978-3-033-02535-6, im Kapitel 4.7.3 "Cutting Force", Seiten 319 bis 322 verwiesen.

Im Folgenden wird auf das Kraftmodell Bezug genommen, das in der Dissertation von C. Dietz, "Numerische Simulation des kontinuierlichen Wälzschleifprozesses unter Berücksichtigung des dynamischen Verhaltens des Systems Maschine - Werkzeug - Werkstück", Diss. ETH Zürich Nr. 24172, https://doi.org/10.3929/ethz-b-000171605, angegeben ist. In diesem Dokument werden Verfahren offenbart, um den kontinuierlichen Wälzschleifprozess numerisch zu modellieren. Dazu wird insbesondere ein Modell für die Berechnung der Schnittkraft vorgestellt, und es werden Verfahren vorgestellt, wie die Parameter dieses Modells experimentell durch Messungen bestimmt werden können.

Das Kraftmodell für die Normalkraft ist in Gl. 4.27 der Dissertation von C. Dietz wie folgt angegeben:

$$F_n = F_0 + k \left( \frac{a_e v_f}{v_c} \right)^{\epsilon_1} l_k^{\epsilon_2} a_p$$

Hierbei bezeichnet $a_e$ die Schnitttiefe, $a_p$ die Schnittbreite, $l_k$ die Kontaktlänge der Spanungszone, $v_c$ die Schnittgeschwindigkeit und $v_f$ die Vorschubgeschwindigkeit. Die Konstanten $F_0$ und $k$ sowie die Exponenten $\varepsilon_1$ und $\varepsilon_2$ sind empirisch zu ermittelnde Grössen.

Die Schnittkraft $F_c$ ist zur Normalkraft $F_n$ proportional, wobei die Proportionalitätskonstante $\mu$ als Kraftverhältnis bezeichnet wird:

$$F_c = \mu F_n$$

Das Kraftverhältnis $\mu$ ist wiederum eine empirisch zu ermittelnde Grösse.

Die geometrischen Grössen $a_e$, $a_p$ und $l_k$ beschreiben die Spanungszone. Sie können analytisch berechnet werden, wie das in Kapitel 4.5.1 der Dissertation von C. Dietz angegeben ist, oder numerisch durch eine Durchdringungsrechnung bestimmt werden.

Insbesondere kann die folgende analytische Beziehung für die Kontaktlänge $l_k$ hergeleitet werden:

$$l_k = \sqrt{r_{pSS,eq}^2 - \left(r_{pSS,eq} - q_t\right)^2} + s_z/2$$

Hier bezeichnet $r_{pSS,eq}$ den äquivalenten Schleifschneckenradius, $q_t$ das nominelle Aufmass und $s_z$ den radialen Vorschub pro Umdrehung des Werkstücks. Der äquivalente Schleifschneckenradius $r_{pSS,eq}$ ergibt sich aus dem realen Schleifschneckenradius $r_{pss}$ wie folgt:

$$r_{pSS,eq} = r_{pSS}/\left(\frac{\sin(\alpha_{SS})}{2}\right)$$

Hier bezeichnet $a_{ss}$ den Eingriffswinkel der Schleifschneckenverzahnung.

Für die Schnittbreite $a_p$ kann die folgende analytische Beziehung hergeleitet werden:

$$a_p = \sqrt{a_{p,max}^2 - \frac{a_{p,max}^2(l_k - 1.5 \cdot s_z)^2}{(l_k - s_z)^2}}$$

Hier bezeichnet $a_{p,max}$ die maximale Schnittbreite. Diese ergibt sich wie folgt:

$$a_{p,max} = \sqrt{L_y^2 - \left(L_y - q_t\right)^2}$$

Dabei bezeichnet $L_y$ die Wälzlänge.

Die Schnitttiefe entspricht dem nominellen Aufmass, welches wiederum mit der radialen Zustellung $\Delta x$ wie folgt zusammenhängt:

$$a_e = q_t = \Delta x \cdot \sin(\alpha_t)$$

Hier bezeichnet $a_t$ den Eingriffswinkel des Werkstücks.

Die Schnittgeschwindigkeit $v_c$ und die Vorschubgeschwindigkeit $v_f$ ergeben sich aus der Kinematik des Wälzschleifprozesses. Auch für diese Grössen lassen sich analytische Formeln angeben, wie das in Kapitel 4.7.1 der Dissertation von C. Dietz angegeben ist. So gilt für die Schnittgeschwindigkeit $v_c$:

$$v_c = \sqrt{v_{cu}^2 + v_{ca}^2 + v_{cw}^2}$$

Hier bezeichnet $v_{cu}$ die Umfangsgeschwindigkeit, $v_{ca}$ die axiale Geschwindigkeitskomponente und $v_{cw}$ die Wälzgeschwindigkeit.

Für die Umfangsgeschwindigkeit $v_{cu}$ gilt:

$$v_{cu} = n_B \pi d_{pSS}/60$$

Hier bezeichnet $n_B$ die Drehzahl des Werkzeugs (in U/min) und $d_{pss}$ den Durchmesser der Schleifschnecke am momentanen Kontaktpunkt entlang der Profilhöhe des jeweiligen Schneckengangs.

Für die die axiale Geschwindigkeitskomponente $v_{ca}$ gilt:

$$v_{ca} = \frac{m_{nSS} z_0 n_B \pi}{60 \cos \gamma}$$

Hier bezeichnet $m_{nSS}$ den Normalmodul der Schleifschnecke, $z_0$ die Gangzahl und $\gamma$ den Steigungswinkel der Schneckenverzahnung.

Für die Wälzgeschwindigkeit $v_{cw}$ gilt:

$$v_{cw} = \frac{m_{nSS} z_0 n_B \pi}{60} \sin \alpha_{SSy}$$

Hier bezeichnet $\alpha_{SSy}$ den örtlichen Eingriffswinkel des Kontaktpunktes an der Schleifschnecke.

Für die Vorschubgeschwindigkeit $v_f$ gilt:

$$v_f = \frac{z_0 s_z n_B}{60 \cos \beta}$$

Hier bezeichnet $\beta$ den Schrägungswinkel der Verzahnung am Werkstück.

Alternativ können die geometrischen Grössen $a_e$, $a_p$ und $l_k$ für die Beschreibung der Spanungszone sowie die Schnittgeschwindigkeit $v_c$ und die Vorschubgeschwindigkeit $v_f$ auch aus einer numerischen Prozesssimulation ermittelt werden.

Die Konstanten $F_0$ und $k$, die Exponenten $\varepsilon_1$ und $\varepsilon_2$ und das Kraftverhältnis $\mu$ können empirisch bestimmt werden, wie das beispielhaft in Kapitel 5.3 der Dissertation von C. Dietz angegeben ist.

In der Dissertation von C. Dietz wurden für das Wälzschleifen von Verzahnungen aus gehärtetem Stahl mit keramisch gebundenen Werkzeugen mit Korund als Schleifmittel empirisch die folgenden Werte ermittelt:

$F_0$ = 21.2422 N
$k$ = 4.4338
$\varepsilon_1$ = 0.1950
$\varepsilon_2$ = 2.0136
$\mu$ = 0.3

Mit diesen Werten können real gemessene Prozesskräfte mit sehr hoher Genauigkeit durch das Kraftmodell reproduziert werden.

Für andere Materialpaarungen können die Werte der genannten Grössen von den oben angegebenen Werten abweichen. Solche Werte können aber ohne Weiteres durch einen Vergleich von gemessenen und berechneten Kraftwerten empirisch bestimmt werden.

Modellierung der Prozessleistung

Die von der Werkzeugspindel aufzubringende Leistung $P_B$ ergibt sich aus dem Produkt der Schnittkraft $F_c$ mit der Umfangsgeschwindigkeit $v_{cu}$ der Schleifschnecke am Kontaktpunkt zwischen Schleifschnecke und Werkstück. Diese Umfangsgeschwindigkeit ist einerseits proportional zur Drehzahl $n_B$ der Werkzeugspindel, andererseits proportional zum wirksamen Hebelarm, welcher dem halben Durchmesser $d_{pss}$ der Schleifschnecke am Kontaktpunkt entspricht.

Die Prozessleistung kann insgesamt modelliert werden als:

$$P\text{-}_B = F_c \cdot n_B \pi d_{pSS}/60$$

Dabei kann in guter Näherung der Durchmesser $d_{pss}$ der Schleifschnecke am Kontaktpunkt durch ihren Aussendurchmesser $d_{ass}$ ersetzt werden.

Berechnung des Normierungsfaktors

Basierend auf diesem Modell der Prozessleistung kann der Normierungsfaktor beispielsweise wie folgt gewählt werden:

$$N_P = \left(F_0 + k\left(\frac{a_e v_f}{v_c}\right)^{\epsilon_1} l_k^{\epsilon_2} a_p\right)^{-E_1} \cdot \left(\frac{d_{aSS}}{d_{aSS,max}}\right)^{-E_2} \left(\frac{n_B}{n_{B,ref}}\right)^{-E_3}$$

Hier bezeichnet $d_{aSS,max}$ den maximalen Aussendurchmesser, der nach dem ersten Abrichtvorgang vorliegt. Alternativ kann hier auch ein beliebiger anderer Referenzwert verwendet werden. Der Ausdruck $n_{B,ref}$ bezeichnet eine beliebige Referenzdrehzahl.

Für die Exponenten $E_1$, $E_2$ und $E_3$ gilt in diesem Modell:

$$E_1 = E_2 = E_3 = 1$$

In einer Erweiterung des Modells können diese Exponenten aber auch von 1 abweichen und empirisch bestimmt werden.

Der erste Faktor (mit Exponent $E_1$) ergibt sich direkt aus dem Kraftmodell. Er berücksichtigt die Geometrie der Schleifschnecke und des Werkstücks sowie die technologischen Vorgaben, insbesondere die radiale Zustellung sowie den axialen Vorschub.

Der zweite Faktor (mit Exponent $E_2$) berücksichtigt die Hebelverhältnisse am Kontaktpunkt, die sich in Abhängigkeit vom Schleifschneckendurchmesser ändern.

Der dritte Faktor (mit Exponent $E_3$) berücksichtigt die Abhängigkeit der Prozessleistung von der Drehzahl der Werkzeugspindel.

Wie sich aus der vorstehenden Diskussion des Kraftmodells und den weiteren Ausführungen in der Dissertation von C. Dietz ergibt, verändert sich die Schnittkraft über die Bearbeitung einer Flanke hinweg in einem gewissen Mass. Für die Zwecke der Prozessüberwachung kann die Schnittkraft allerdings über die Bearbeitung einer Flanke hinweg als konstant angesehen werden, unter Vernachlässigung von Ein- und Auslauf. Entsprechend genügt es, den Normierungsfaktor $N_p$ nach jedem Abrichtvorgang (der ja die Geometrie der Schleifschnecke verändert) und nach jeder Änderung der technologischen Parameter (insbesondere radiale Zustellung und/oder axialer Vorschub) neu zu berechnen. Dieser Normierungsfaktor $N_p$ kann dann für alle Werkstücke eines Abrichtzyklus verwendet werden.

Der Normierungsfaktor $N_p$ kann selbstverständlich auch auf andere Weise als oben angegeben berechnet werden. Auch sind komplexere Normierungsoperationen denkbar, z.B. Operationen, die zunächst eine Subtraktion umfassen, um einen Offset zu beseitigen, und erst anschliessend eine Multiplikation bzw. Division.

Die vorstehenden Überlegungen gelten für das Wälzschleifen. Für andere Feinbearbeitungsverfahren existieren andere Modelle der Schnittkraft, und entsprechend wird sich für andere Feinbearbeitungsverfahren der Normierungsfaktor vom vorstehend angegebenen Normierungsfaktor unterscheiden.

Flussdiagramme für beispielhafte Verfahren

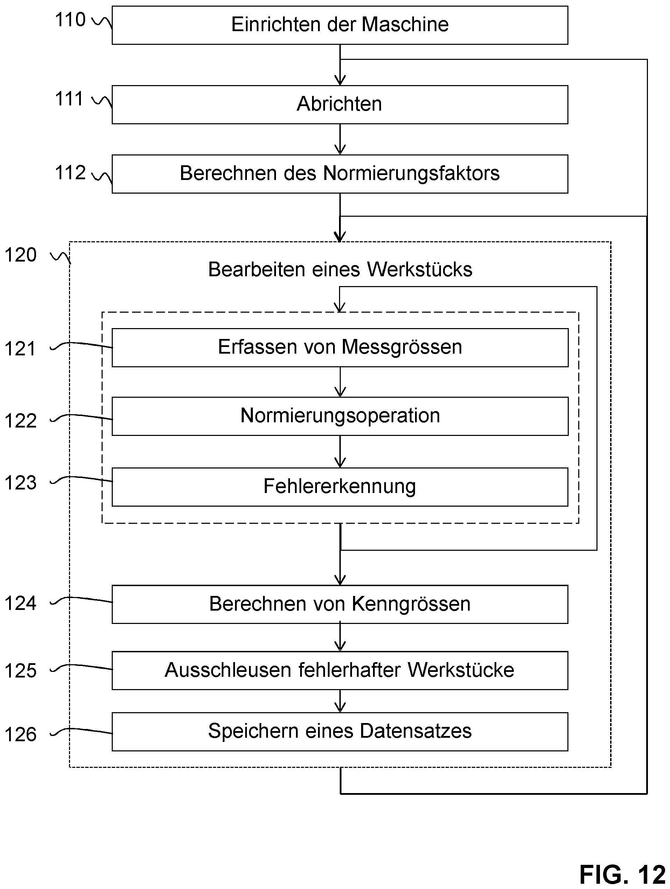

Figur 12 zeigt ein Flussdiagramm eines beispielhaften Verfahrens zur Prozessüberwachung im Rahmen der Wälzschleifbearbeitung eines Loses gleichartiger Werkstücke mit einer Feinbearbeitungsmaschine der in Fig. 1 dargestellten Art.

In Schritt 110 wird die Feinbearbeitungsmaschine eingerichtet, und die relevanten Prozessparameter (insbesondere geometrische Parameter von Schleifschnecke und Werkstücken sowie technologische Parameter wie radiale Zustellung und axialer Vorschub) werden via Bedientafel 43 in die Maschinensteuerung 42 eingegeben. In Schritt 111 wird die Schleifschnecke 16 abgerichtet, und der Aussendurchmesser der abgerichteten Schleifschnecke wird bestimmt. In Schritt 112 wird auf Basis der Prozessparameter und des nun vorliegenden Schleifschneckenaussendurchmessers ein Normierungsfaktor berechnet.

In Block 120 folgt die Bearbeitung der einzelnen Werkstücke des Loses. Während der Bearbeitung werden in Schritt 121 von der Prozessüberwachungseinrichtung 44 laufend Messgrössen erfasst. In Schritt 122 wird mindestens ein Teil der Messgrössen, insbesondere Messgrössen, die sich auf die Stromaufnahme der Werkzeugspindel beziehen, in Echtzeit normiert. Die nun zum Teil normierten Messgrössen werden in Schritt 123 laufend in Echtzeit analysiert, um direkt online, noch während der Bearbeitung des einzelnen Werkstücks, anhand von Prozessabweichungen mögliche Bearbeitungsfehler zu erkennen. Wenn ein möglicher Bearbeitungsfehler erkannt wurde, wird in der Prozessüberwachungseinrichtung eine entsprechende Hinweisvariable gesetzt. Die Schritte 121 bis 123 werden während der Bearbeitung des Werkstücks laufend wiederholt.

Unmittelbar nach Beendigung der Bearbeitung des Werkstücks werden in Schritt 124 Kenngrössen aus den zum Teil normierten Messgrössen berechnet. Die Kenngrössen werden mit Vorgaben verglichen. Wenn sich ergibt, dass die Kenngrössen übermässig von den Vorgaben abweichen, wird wiederum eine Hinweisvariable für einen Bearbeitungsfehler gesetzt.

Anhand der Hinweisvariablen wird in Schritt 125 ein Werkstückhandlingsystem instruiert, Werkstücke, bei denen Hinweise auf Bearbeitungsfehler erkannt wurden, aus dem weiteren Prozess auszuschleusen. Diese Werkstücke können einer genaueren Prüfung unterzogen oder sofort als NIO-Teile verworfen werden.

In Schritt 126 wird für jedes Werkstück ein Datensatz in einer Datenbank abgespeichert.

Dieser Datensatz umfasst eine eindeutige Werkstückkennung, die wichtigsten Prozessparameter, die ermittelten Kenngrössen und gegebenenfalls die Hinweisvariablen.

Die Bearbeitung von Werkstücken wird nun in gleicher Weise wiederholt, bis die Schleifschnecke soweit abgenutzt wurde, dass eine erneute Abrichtoperation notwendig wird. In diesem Fall wird Schritt 111 wiederholt, d.h. die Schleifschnecke wird erneut abgerichtet, und ihr neuer Aussendurchmesser wird bestimmt. Entsprechend wird in Schritt 112 der Normierungsfaktor neu berechnet. Die Bearbeitung 120 der Werkstücke wird nun mit der neu abgerichteten Schleifschnecke und dem neuen Normierungsfaktor fortgesetzt.

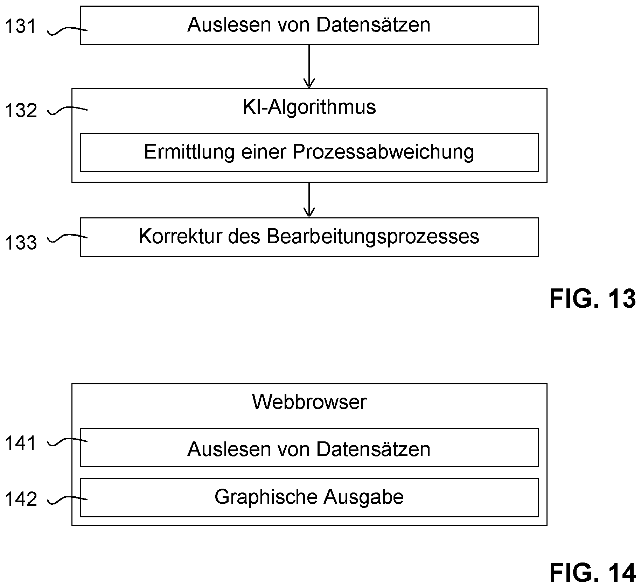

Figur 13 illustriert, wie aus den abgespeicherten Datensätzen für mehrere Werkstücke automatisch weitere Prozessabweichungen erkannt werden können. In Schritt 131 werden Datensätze für eine Mehrzahl von Werkstücken aus der Datenbank ausgelesen. In Schritt 132 werden diese Datensätze durch einen KI-Algorithmus (KI = Künstliche Intelligenz) analysiert, um aus den Datensätzen Prozessabweichungen zu identifizieren, die möglicherweise nicht direkt während der Bearbeitung der einzelnen Werkstücke erkennbar waren. In Schritt 133 werden aufgrund des Ergebnisses dieser Analyse automatisch Massnahmen zur Korrektur des Bearbeitungsprozesses eingeleitet (z.B. Verringerung des axialen Vorschubs usw.). Diese Schritte können immer dann ausgeführt werden, wenn eine bestimmte Mindestzahl von Werkstücken bearbeitet wurden. Die Analyse kann aber auch noch nachträglich nach dem Ende der Bearbeitung des Werkstückloses durchgeführt werden, um z.B. nachträglich diejenigen Werkstücke zu identifizieren, die von einem Bearbeitungsfehler betroffen sind.

Dieser Vorgang erfordert nur einen moderaten Rechen- und Speicherbedarf, da die abgespeicherten Datensätze im Vergleich zu den direkt während der Bearbeitung erfassten Datenmengen sehr klein sind.

Wie in Figur 14 illustriert ist, können unabhängig davon die Datensätze zu einem beliebigen Zeitpunkt mit einem Client-Computer über ein Netzwerk aus der Datenbank auslesen werden (Schritt 141) und graphisch aufbereitet und ausgegeben werden (Schritt 142). Auch dieser Vorgang erfordert nur einen sehr moderaten Rechen- und Speicherbedarf. Dies ermöglicht es, diesen Vorgang durch ein Plugin in einem Webbrowser auszuführen. Basierend auf dieser Ausgabe kann der Bediener eine Fehleranalyse durchführen und z.B. die vorstehend beschriebenen Hüllkurven, die während der Echtzeitanalyse angewendet werden, neu bestimmen.


Blockdiagramm für Funktionsblöcke der Prozessüberwachungseinrichtung

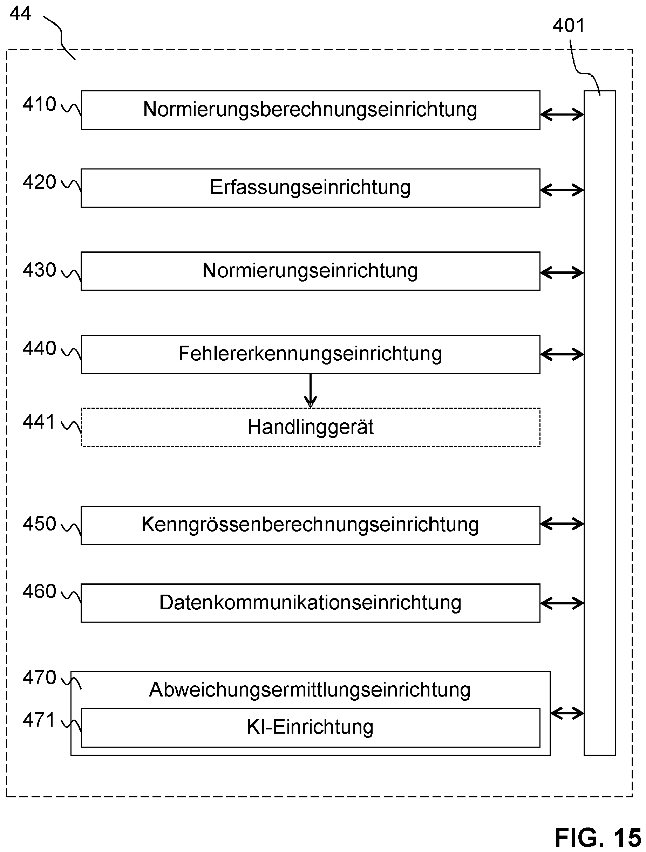

In Fig. 15 ist beispielhaft ein Blockdiagramm dargestellt, das schematisch verschiedene Funktionsblöcke der Prozessüberwachungseinrichtung 44 zeigt. Die Funktionsblöcke sind über eine Befehls- und Datenaustauschkomponente 401 funktional miteinander verbunden.

Eine Normierungsberechnungseinrichtung 410 nimmt bei Bedarf eine Berechnung des Normierungsfaktors vor. Eine Erfassungseinrichtung 420 dient zur Erfassung von Messwerten. Eine Normierungseinrichtung 430 normiert mindestens einen Teil der Messwerte unmittelbar nach ihrer Erfassung. Eine Fehlererkennungseinrichtung 440 analysiert die teilweise normierten Messwerte und identifiziert daraus unzulässige Prozessabweichungen. Ein (strenggenommen nicht zur Prozessüberwachungseinrichtung gehörendes) Handlinggerät 441 schleust darauf basierend Werkstücke aus, die mit unzulässigen Prozessabweichungen bearbeitet wurden. Eine Kenngrössenberechnungseinrichtung 450 berechnet nach Ende der Bearbeitung eines Werkstücks Kenngrössen aus den teilweise normierten Messwerten. Eine Datenkommunikationseinrichtung 460 dient zur Kommunikation mit einem Datenbankserver. Eine Abweichungsermittlungseinrichtung 470 dient zur automatischen Ermittlung von Prozessabweichungen. Dazu weist diese eine Prozessoreinrichtung 471 auf, die einen KI-Algorithmus ausführt.

Es versteht sich von selbst, dass eine Vielzahl von Abwandlungen der vorstehend dargestellten Beispiele möglich ist.

**Patentansprüche**

1. Verfahren zur Überwachung eines Bearbeitungsprozesses, bei dem Zahnflanken vorverzahnter Werkstücke (23) mit einer Feinbearbeitungsmaschine (1) bearbeitet werden, wobei die Feinbearbeitungsmaschine (1) eine Werkzeugspindel (15) zum rotierenden Antrieb eines Feinbearbeitungswerkzeugs (16) um eine Werkzeugachse (B) und mindestens eine Werkstückspindel (21) zum rotierenden Antrieb eines vorverzahnten Werkstücks (23) aufweist, wobei das Verfahren umfasst:

   Erfassen einer Vielzahl von Messwerten, während das Feinbearbeitungswerkzeug (16) in einem Bearbeitungseingriff mit einem Werkstück (23) steht; und
   Berechnen von Kenngrössen des Bearbeitungsprozesses aus den Messwerten oder daraus abgeleiteten Werten,
   wobei mindestens eine der Kenngrössen mit einem vordefinierten Bearbeitungsfehler des Werkstücks (23) korreliert.

2. Verfahren nach Anspruch 1, welches umfasst:

   Durchführen einer Verzahnungsmessung für ausgewählte Werkstücke (23), um pro Werkstück mindestens eine Verzahnungsmessgrösse zu ermitteln, die den vordefinierten Bearbeitungsfehler charakterisiert; und
   Ermitteln von Korrelationsparametern, die die Korrelation der mindestens einen Kenngrösse mit der mindestens einen Verzahnungsmessgrösse charakterisieren.

3. Verfahren nach Anspruch 1 oder 2, wobei die Berechnung mindestens einer der Kenngrössen eine spektrale Analyse von Messwerten oder daraus abgeleiteten Werten umfasst, um eine Vielzahl von Spektralanteilen zu ermitteln.

4. Verfahren nach Anspruch 3, wobei Spektralanteile bei Vielfachen der Drehzahl der Werkzeugspindel (15) und/oder der Werkstückspindel (21) ausgewertet werden.

5. Verfahren nach Anspruch 3 oder 4, wobei der Bearbeitungsprozess ein Wälzprozess ist, bei dem das Feinbearbeitungswerkzeug (16) und das Werkstück (23) in einem Wälzeingriff stehen, und wobei die Kenngrössen mindestens eine der folgenden Grössen umfassen:

   einen Summenteilungsindikator (I_fP), wobei der Summenteilungsindikator (I_fP) aus einem Spektralanteil bei der Drehzahl der Werkstückspindel (15) berechnet wird und mit einem Summenteilungs- oder Rundlauffehler des Werkstücks (23) korreliert;
   einen Verschleissindikator (I_Wear), wobei der Verschleissindikator (I_Wear) aus einem tieffrequenten Spektralanteil berechnet wird und mit einem Verschleissgrad des Feinbearbeitungswerkzeugs (16) korreliert;
   einen Profilformindikator (I_ffa), wobei der Profilformindikator aus einem Spektralanteil bei der Zahneingriffsfrequenz berechnet wird und mit einer Profilformabweichung des Werkstücks (23) korreliert.

6. Verfahren nach einem der vorhergehenden Ansprüche, welches umfasst:
   Abspeichern eines Datensatzes in einer Datenbank (46), wobei der Datensatz eine eindeutige Kennung des Werkstücks, mindestens einen Prozessparameter und mindestens eine der Kenngrössen umfasst.

7. Verfahren nach einem der vorhergehenden Ansprüche, welches umfasst:

   Ausführen einer Analyse von Werten mindestens einer der Kenngrössen für eine Mehrzahl von Werkstücken (23), um eine Prozessabweichung zu ermitteln; und
   Verändern des Bearbeitungsprozesses, um die Prozessabweichung zu vermindern.

8. Verfahren nach Anspruch 7, wobei die Analyse durch einen trainierten maschinellen Lernalgorithmus erfolgt.

9. Verfahren nach Anspruch 7 oder 8, wobei die Analyse umfasst:
   Korrelieren von Werten mindestens einer der Kenngrössen für eine Mehrzahl von Werkstücken (23) mit einer anderen Grösse des Bearbeitungsprozesses.

10. Verfahren nach einem der vorhergehenden Ansprüche, welches umfasst:
graphisches Ausgeben von Werten mindestens einer der Kenngrössen oder daraus abgeleiteter Werte für eine Mehrzahl von Werkstücken, insbesondere in einem Webbrowser.

11. Feinbearbeitungsmaschine für die Bearbeitung von Zahnflanken vorverzahnter Werkstücke, aufweisend:

eine Werkzeugspindel (15) zum rotierenden Antrieb eines Feinbearbeitungswerkzeugs (16) um eine Werkzeugachse (B);
mindestens eine Werkstückspindel (21) zum rotierenden Antrieb eines vorverzahnten Werkstücks (23);
eine Steuereinrichtung (40) zur Steuerung eines Bearbeitungsprozesses des Werkstücks (23) mit dem Feinbearbeitungswerkzeug (16); und
eine Prozessüberwachungseinrichtung (44), welche dazu hergerichtet ist, das Verfahren zur Überwachung des Bearbeitungsprozesses nach einem der vorhergehenden Ansprüche auszuführen.

12. Feinbearbeitungsmaschine nach Anspruch 11, wobei die Prozessüberwachungseinrichtung eine Kenngrössenberechnungseinrichtung (450) zum Berechnen von Kenngrössen des Bearbeitungsprozesses aus den Messwerten oder daraus abgeleiteten Werten aufweist, wobei die Kenngrössenberechnungseinrichtung (450) vorzugsweise dazu ausgebildet ist, für mindestens eine der Kenngrössen eine spektrale Analyse von Messwerten oder daraus abgeleiteten Werten auszuführen und dabei insbesondere Spektralanteile bei Vielfachen der Drehzahl der Werkzeugspindel (15) und/oder der Werkstückspindel (21) auszuwerten.

13. Feinbearbeitungsmaschine nach Anspruch 12, wobei die Prozessüberwachungseinrichtung aufweist:

eine Datenkommunikationseinrichtung (460) zum Übermitteln eines Datensatzes an eine Datenbank (46), wobei der Datensatz eine eindeutige Kennung des Werkstücks, mindestens einen Prozessparameter und mindestens eine der Kenngrössen umfasst; und/oder
eine Abweichungsermittlungseinrichtung (470) zum Ermitteln einer Prozessabweichung des Bearbeitungsprozesses von einem Sollprozess anhand von Werten mindestens einer der Kenngrössen für eine Mehrzahl von Werkstücken (23), wobei die Abweichungsermittlungseinrichtung (470) vorzugsweise eine Prozessoreinrichtung (471) umfasst, die programmiert ist, einen trainierten maschinellen Lernalgorithmus auszuführen, um die Prozessabweichung zu ermitteln.

14. Computerprogramm, umfassend Befehle, welche bewirken, dass eine Prozessüberwachungseinrichtung in einer Feinbearbeitungsmaschine (1) nach einem der Ansprüche 11 bis 13 ein Verfahren nach einem der Ansprüche 1 bis 10 ausführt.

15. Computerlesbares Medium, auf dem das Computerprogramm nach Anspruch 14 gespeichert ist.

**FIG. 1**

FIG. 2

FIG. 3

FIG. 4

FIG. 5

**FIG. 6**

EP 4 113 228 A1

FIG. 7

FIG. 8

FIG. 9

FIG. 10

EP 4 113 228 A1

FIG.11

110 ⌇ Einrichten der Maschine

111 ⌇ Abrichten

112 ⌇ Berechnen des Normierungsfaktors

120 ⌇ Bearbeiten eines Werkstücks

121 ⌇ Erfassen von Messgrössen

122 ⌇ Normierungsoperation

123 ⌇ Fehlererkennung

124 ⌇ Berechnen von Kenngrössen

125 ⌇ Ausschleusen fehlerhafter Werkstücke

126 ⌇ Speichern eines Datensatzes

FIG. 12

131 — Auslesen von Datensätzen

132 — KI-Algorithmus

Ermittlung einer Prozessabweichung

133 — Korrektur des Bearbeitungsprozesses

**FIG. 13**

Webbrowser

141 — Auslesen von Datensätzen

142 — Graphische Ausgabe

**FIG. 14**

**44**

**401**

| 410 | Normierungsberechnungseinrichtung | ⟷ |
| 420 | Erfassungseinrichtung | ⟷ |
| 430 | Normierungseinrichtung | ⟷ |
| 440 | Fehlererkennungseinrichtung | ⟷ |
| 441 | Handlinggerät | |
| 450 | Kenngrössenberechnungseinrichtung | ⟷ |
| 460 | Datenkommunikationseinrichtung | ⟷ |
| 470 | Abweichungsermittlungseinrichtung | |
| 471 | KI-Einrichtung | ⟷ |

**FIG. 15**

Europäisches Patentamt
European Patent Office
Office européen des brevets

# EUROPÄISCHER RECHERCHENBERICHT

**Nummer der Anmeldung**

EP 22 19 0820

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2018/264613 A1 (TAMAI TAKAYUKI [JP] ET AL) 20. September 2018 (2018-09-20) <br> * Abbildungen 1,2,5 * <br> * Absatz [0028] – Absatz [0030] * <br> * Absatz [0041] * <br> * Absatz [0050] * <br> * Absatz [0055] * <br> * Absatz [0066] * <br> ----- | 1-15 | INV. <br> G05B19/406 <br> B23F23/12 |
| Y | US 2018/307203 A1 (AIZAWA NOBUAKI [JP] ET AL) 25. Oktober 2018 (2018-10-25) <br> * Abbildungen 1,3A,3B * <br> * Absatz [0040] * <br> * Absatz [0033] * <br> * Absatz [0025] * <br> * Absatz [0034] * <br> * Absatz [0031] * <br> * Absatz [0043] * <br> ----- | 1-15 | |
| A | JP H04 106145 U (MURATA KIKAI KABUSHIKI KAISHA) 11. September 1992 (1992-09-11) <br> * Absatz [0012] – Absatz [0015] * <br> ----- | 1-15 | **RECHERCHIERTE SACHGEBIETE (IPC)** <br><br> G05B <br> B23Q |
| A | US 2019/196417 A1 (UNO KOUSUKE [JP]) 27. Juni 2019 (2019-06-27) <br> * Abbildung 2 * <br> * Absatz [0041] * <br> ----- | 1-15 | |
| Y | US 2012/156963 A1 (VOGLER MICHAEL PATRICK [US] ET AL) 21. Juni 2012 (2012-06-21) <br> * Abbildung 2 * <br> * Absatz [0016] – Absatz [0017] * <br> * Absatz [0025] * <br> * Absatz [0035] * <br> ----- | 1-15 | |

Der vorliegende Recherchenbericht wurde für alle Patentansprüche erstellt

| Recherchenort | Abschlußdatum der Recherche | Prüfer |
|---|---|---|
| Den Haag | 18. November 2022 | Antonopoulos, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 22 19 0820

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-11-2022

| Im Recherchenbericht angeführtes Patentdokument | Datum der Veröffentlichung | Mitglied(er) der Patentfamilie | Datum der Veröffentlichung |
|---|---|---|---|
| US 2018264613 A1 | 20-09-2018 | CN 108628253 A | 09-10-2018 |
| | | DE 102018002112 A1 | 20-09-2018 |
| | | JP 2018156151 A | 04-10-2018 |
| | | US 2018264613 A1 | 20-09-2018 |
| US 2018307203 A1 | 25-10-2018 | CN 108733027 A | 02-11-2018 |
| | | DE 102018108779 A1 | 25-10-2018 |
| | | JP 6530779 B2 | 12-06-2019 |
| | | JP 2018181216 A | 15-11-2018 |
| | | US 2018307203 A1 | 25-10-2018 |
| JP H04106145 U | 11-09-1992 | KEINE | |
| US 2019196417 A1 | 27-06-2019 | CN 109960219 A | 02-07-2019 |
| | | DE 102018010054 A1 | 27-06-2019 |
| | | JP 6680756 B2 | 15-04-2020 |
| | | JP 2019117458 A | 18-07-2019 |
| | | US 2019196417 A1 | 27-06-2019 |
| US 2012156963 A1 | 21-06-2012 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014015587 A1
- US 5070655 A
- US 3809970 A
- US 4894644 A
- WO 2017194251 A1
- US 6577917 B1


**In der Beschreibung aufgeführte Nicht-Patentliteratur**

- Basic Methods of Generating Grinding. **H. SCHRIEFER ; REISHAUER AG et al.** Continuous Generating Gear Grinding. Eigenverlag, 2010, 121-129
- **BUCH VON SCHRIEFER et al.** *Quality Assurance in Continuous Generating Gear Grinding,* 155-200
- **BUCH VON SCHRIEFER et al.** *Analysing and Eliminating Gear Tooth Deviations,* 542-551
- *NORDMANN Tool Monitoring,* 05. Oktober 2017
- **KLAUS NORDMANN.** Prozessüberwachung beim Schleifen und Abrichten. *Schleifen + Polieren 05/2004, Fachverlag Möller, Velbert (DE),* 52-56
- Cutting Force. **BUCH VON H. SCHRIEFER ; REISHAUER AG et al.** Continuous Generating Gear Grinding. Eigenverlag, 2010, 319-322
- Numerische Simulation des kontinuierlichen Wälzschleifprozesses unter Berücksichtigung des dynamischen Verhaltens des Systems Maschine - Werkzeug - Werkstück. **VON C. DIETZ.** Dissertation